# EUROPEAN PATENT APPLICATION

(11) **EP 2 192 715 A2**
(43) Date of publication of application: **02.06.2010**
(21) Application number: 09177401.8
(22) Date of filing: 27.11.2009
(51) Int. Cl.: H04L 1/08

(54) **System including transmitter and receiver**

(30) Priority: 01.12.2008 JP 2008305886
(71) Applicant: FUJITSU LIMITED, Kawasaki-shi, Kanagawa 211-8588 (JP)
(72) Inventor: Sano, Yoshihiko, Kawasaki-shi Kanagawa 211-8588 (JP); Sano, Kouji, Kawasaki-shi Kanagawa 211-8588 (JP); Araki, Kazuhiko, Kawasaki-shi Kanagawa 211-8588 (JP)
(74) Representative: Fenlon, Christine Lesley

(57) **Abstract**

A system includes a transmitter, a receiver and a plurality of paths connecting the transmitter and the receiver, the transmitter being configured to transmit a command and data to the receiver, the transmitter including a plurality of transmitting units that transmit the command and the data, a dividing unit that divides data into a plurality of segments, and that enables each of the transmitting units to transmit each of the segments of the data, and a duplicating unit that duplicates the command, and that enables each of the transmitting units to transmit each of the duplicated commands, the receiver including a plurality of receiving units that receive the command and the data, a merging unit that merges the segments of data back into a data, and a controller that receives the duplicated commands from the transmitting units via the paths.

## Description

### FIELD

The present invention relates to a system including a transmitter and a receiver.

### BACKGROUND

In recent years, internal performance of a device has been enhanced along with improvement in performance of an LSI (Large Scale Integrated circuit). In addition, processing can be performed at higher speed if plural computers are connected together through a communication interface and prompted to execute processing in cooperation with one another. A performance of a system configured by such plural computers tends to vary depending on a performance of the communication interface connecting between the devices. In view of this, an inter device interface that realizes both of high speed operation and high reliability has been demanded.

Existing inter device communication interfaces employ a parallel transmission method for transferring clock signals and transfer data in parallel and in step with each other. However, the parallel transmission method has problems of signal attenuation and phase differences between a clock signal and transfer data and between transfer data. Thus, there is a limit on improvement of both of a transfer speed and a transfer distance at the parallel transmission.

In addition, a longer communication cable is needed for connecting between servers as the number of servers constituting the system is increased. The problems of signal attenuation and phase difference involved in the parallel transmission method emerge more seriously as the length of the communication cable increases.

To solve the problems involved in the parallel transmission method, there has been reported a communication interface based on a serial-transmission method like PCI-Express (Peripheral Component Interconnect-Express) or InfiniBand (trademark). Many general-purpose transfer modules have been recently developed to realize such an interface in a relatively simple manner.

Here, as for a serial-transfer method using the general-purpose transfer modules, the upper limit of its transfer speed is defined. Accordingly, this method may not perform high speed transfer beyond the specifications. Further, the serial transfer has a problem concerning jitter that is a time lag or scattering between signals and thus needs to take a countermeasure against a data error. As a result, even if no limit is imposed by the specifications, the serial transmission has a speed up limitation. To that end, one conceivable technique that enhances data transmission efficiency is to divide data and transfer the individual divided data through plural communication paths in a serial manner.

Incidentally, information transmitted between computers is classified into information for which high speed transmission is important and information for which high reliability is important. For example, in the case of transmitting or receiving any command between computers, it is preferable to transmit the command without fail. In other words, if any error occurs during transfer of a command and the command is retransmitted, the command is executed with some delay on a receiving side, leading to a delay of the entire system processing. On the other hand, in the case of transferring a large quantity of data other than commands, it is desired to transmit the data at as high speed as possible. By speeding up the data transmission, system processing efficiency is accordingly improved. Here, even if any error occurs in transmission of some of the large quantity of data during the data transfer, and the error data is retransmitted, the retransmitting processing has less effect on whether the entire system processing is delayed.

According to existing communication techniques, however, this causes a loss of reliability or reduction in transmission efficiency depending on the type of information (command or data). For example, if high speed transmission is emphasized, reliability is impaired and high reliability may not be secured upon command transmission. Further, if reliability is emphasized, it takes much time to transfer a large quantity of data, resulting in reduction in processing efficiency of the entire system. As described above, conditions of high speed operation and high reliability needed of each of various kinds of information may not be satisfied enough.

[Patent Document 1] Japanese Laid-open Patent Publication No. 2002-64506

### SUMMARY

Accordingly, it is considered desirable to provide a data transmission method that can perform communications while satisfying conditions of high speed operation and high reliability needed of each of various kinds of information.

According to an aspect of the invention (or at least an aspect of one embodiment), a system includes a transmitter, a receiver and a plurality of paths connecting the transmitter and the receiver, the transmitter being configured to transmit a command and data to the receiver, the receiver being configured to process the data upon successful receipt of the command, the transmitter including a plurality of transmitting units that transmit the command and the data, each of the transmitting units being connected to one of the paths, a dividing unit that divides data into a plurality of segments, and that enables each of the transmitting units to transmit each of the segments of the data via each of the corresponding paths, respectively, and a duplicating unit that duplicates the command, and that enables each of the transmitting units to transmit each of the duplicated commands via each of the paths, the receiver including a plurality of receiving units that receive the command and the data, each of the receiving units being connected to each of the transmitting units via each of the paths, respectively, a merging unit that merges the segments of data back into a data, and a controller that receives the duplicated commands from the transmitting units via the paths, and upon confirmation of successful receipt of at least one of the duplicated commands, that starts to process the merged data in accordance with the command.

### BRIEF DESCRIPTION OF DRAWINGS

FIG. 1 schematically illustrates an embodiment of the invention;

FIG. 2 illustrates a system configuration example of this embodiment;

FIG. 3 illustrates how transmission control units are connected together;

FIG. 4 is a detailed diagram of an interface between a transmitting device and a receiving device;

FIG. 5 illustrates the internal configuration of an output converter;

FIG. 6 is a flowchart illustrating a procedure of command packet generating processing;

FIG. 7 is a flowchart illustrating a procedure of storage data packet generating processing;

FIG. 8 is a flowchart illustrating a procedure for packet transmitting processing;

FIG. 9 is a first diagram illustrating an internal circuit of an output converter;

FIG. 10 is a second diagram illustrating the internal circuit of the output converter;

FIGs. 11A and 11B are third diagrams illustrating the internal circuit of the output converter;

FIG. 12 illustrates data structure of a command packet;

FIG. 13 illustrates a data structure example of a storage data packet;

FIG. 14 illustrates the detailed structure of the storage data packet;

FIG. 15 illustrates the internal configuration of an input converter;

FIG. 16 is a flowchart illustrating a procedure for packet receiving processing;

FIG. 17 is a flowchart illustrating a procedure for command data selecting processing;

FIG. 18 is a flowchart illustrating a procedure for storage data merging processing;

FIGs. 19A and 19B are first diagrams illustrating an internal circuit of an input converter;

FIG. 20 is a second diagram illustrating the internal circuit of the input converter;

FIG. 21 is a third diagram illustrating the internal circuit of the input converter;

FIGs. 22A and 22B are fourth diagrams illustrating the internal circuit of the input converter;

FIG. 23 illustrates an example of how to select command data;

FIG. 24 illustrates an example of how to merge storage data;

FIG. 25 illustrates how much block data is restored;

FIG. 26 illustrates how an error occurs in plural blocks; and

FIG. 27 illustrates how data including command packets and storage data packets in mixture is transmitted.

### DESCRIPTION OF EMBODIMENTS

Hereinafter, an embodiment of the present invention will be described with reference to the drawings. However, it is to be clearly understood that this description is given to assist with understanding of the invention only, and the invention is not necessarily limited to or by any of the particular features described or shown.

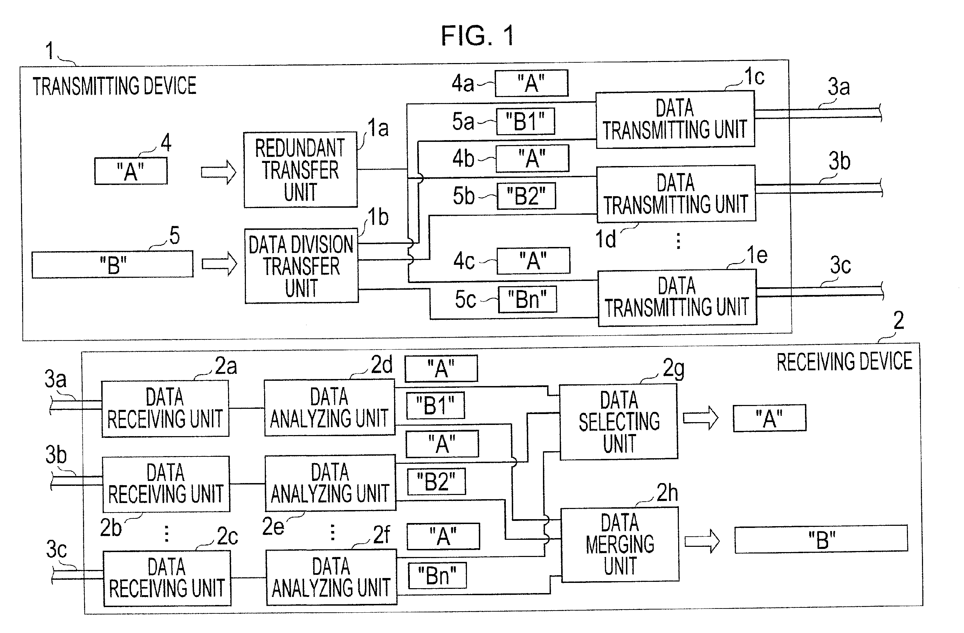

FIG. 1 schematically illustrates the embodiment which will be described. A transmitting device 1 and a receiving device 2 are connected through plural communication paths 3a, 3b, and 3c.

The transmitting device 1 includes a redundant transfer unit 1a, a data division transfer unit 1b, and plural data transmitting units 1c, 1d, and 1e.

The redundant transfer unit 1a performs redundant transfer through plural communication paths as follows: when receiving target data 4 for redundant transfer, the redundant transfer unit 1a transfers plural redundant transfer data 4a, 4b, and 4c similar to the input data to the plural communication paths 3a, 3b, and 3c, respectively.

When the data division transfer unit 1b receives target data 5 for division transfer, the input data 5 is divided into plural division data 5a, 5b, and 5c. The data division transfer unit 1b sorts the thus divided division data 5a, 5b, and 5c into the plural communication paths 3a, 3b, and 3c. Then, the data division transfer unit 1b transfers the division data 5a, 5b, and 5c to a corresponding one of the communication paths 3a, 3b, and 3c, respectively. In this way, the data division transfer unit 1b performs division transfer through the plural communication paths.

The data transmitting units 1c, 1d, and 1e are disposed for each of the plural communication paths 3a, 3b, and 3c. Each of the data transmitting units 1c, 1d, and 1e receives the redundant transfer data 4a, 4b, and 4c or division data 5a, 5b, and 5c transferred from the redundant transfer unit 1a or the data division transfer unit 1b toward a corresponding one of the communication paths 3a, 3b, and 3c. Then, the data transmitting units 1c, 1d, and 1e transmit the received data to the receiving device 2 through the corresponding one of the communication paths 3a, 3b, and 3c.

The receiving device 2 includes plural data receiving units 2a, 2b, and 2c, plural data analyzing units 2d, 2e, and 2f, a data selecting unit 2g, and a data merging unit 2h.

The data receiving units 2a, 2b, and 2c are disposed for each of the plural communication paths 3a, 3b, and 3c. The data receiving units 2a, 2b, and 2c receive the redundant transfer data 4a, 4b, and 4c or division data 5a, 5b, and 5c from the transmitting device 1 through a corresponding one of the communication paths 3a, 3b, and 3c.

The analyzing units 2d, 2e, and 2f are disposed for each of the plural data receiving units 2a, 2b, and 2c. The analyzing units 2d, 2e, and 2f analyze data received with a corresponding one of the data receiving units 2a, 2b, and 2c. Then, the analyzing units 2d, 2e, and 2f determine whether the received data correspond to the redundant transfer data 4a, 4b, and 4c obtained by redundant transmitting the same data through the plural communication paths 3a, 3b, and 3c or the division data 5a, 5b, and 5c obtained by distributing divided data of the original data into the communication paths 3a, 3b, and 3c and transferring the data to the communication paths 3a, 3b, and 3c. If the received data correspond to the redundant transfer data 4a, 4b, and 4c, the analyzing units 2d, 2e, and 2f transmit the redundant transfer data 4a, 4b, and 4c to the data selecting unit 2g, respectively. And, if the received data correspond to the division data 5a, 5b, and 5c, the analyzing units 2d, 2e, and 2f transmit the division data 5a, 5b, and 5c to the data merging unit 2h, respectively.

The data selecting unit 2g acquires the redundant transfer data 4a, 4b, and 4c from each of the plural analyzing units 2d, 2e, and 2f and selects one of the acquired data 4a, 4b, and 4c. For example, the data received first is selected. Then, the data selecting unit 2g outputs the selected data.

The data merging unit 2h acquires the division data 5a, 5b, and 5c from each of the plural analyzing units 2d, 2e, and 2f. The data merging unit 2h merges the acquired division data 5a, 5b, and 5c to generate data 5. Then, the data merging unit 2h outputs the generated data 5.

As for the data 4, in the thus configured transmitting device 1 and receiving device 2, the same data content is redundantly transmitted by transferring the redundant transfer data through the plural communication paths 3a, 3b, and 3c. As for the data 5, the plural communication paths 3a, 3b, and 3c transmit the data in parallel. This enables both of high reliability in the data 4 and high speed data transfer of the data 5.

By applying the transmission method illustrated in FIG. 1 to a computer system having plural servers operated in cooperation, the computer system can attain both of high reliability and high speed operation. In other words, in the computer system having plural servers operated in cooperation, a command may be sent or received accurately at the right time to run the servers in cooperation. In addition, a speed of data transmission between the servers may be increased in order to improve performance of the entire system.

The embodiment is described in detail taking as an example the case of applying the communication method illustrated in FIG. 1 to a system having plural servers operated in cooperation.

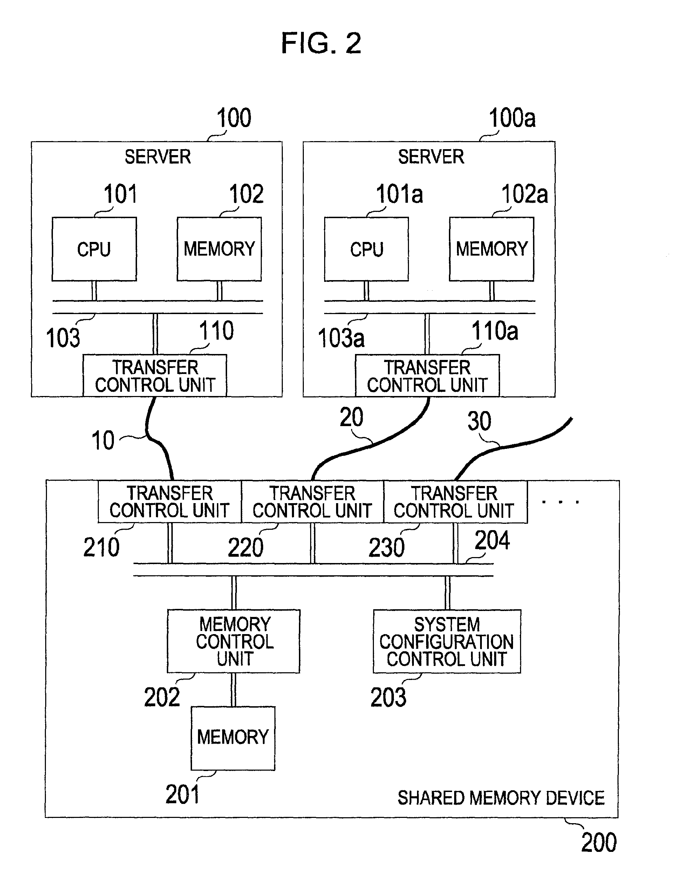

FIG. 2 illustrates a system configuration example of this embodiment. The system illustrated in FIG. 2 includes servers 100, 100a, ... as plural information processing units and one shared (common) memory device 200.

The server 100 includes a CPU (Central Processing Unit) 101 as an arithmetic processing unit, a memory 102 as a storage device, and a transfer control unit 110. The CPU 101, the memory 102, and the transfer control unit 110 are connected with one another through an internal bus 103. The CPU 101 controls the entire server 100. The memory 102 stores programs to be executed on the CPU 101 and data needed for processing.

The transfer control unit 110 is connected to a transfer control unit 210 in the shared memory device 200 through an inter device interface cable group 10. The transfer control unit 110 transmits a command or data input through the internal bus 103 toward the inter device interface cable group 10. Further, the transfer control unit 110 receives a command or data input through the inter device interface cable group 10.

Similar to the server 100, the server 100a includes a CPU 101a, a memory 102a, and a transfer control unit 110a. The CPU 101a, the memory 102a, and the transfer control unit 110a are connected with one another through an internal bus 103a. The transfer control unit 110a is connected to a transfer control unit 220 in the shared memory device 200 through an inter device interface cable group 20. The CPU 101a, the memory 102a, and the transfer control unit 110a each have the same functions as those of a corresponding component of the same name in the server 100.

The shared memory device 200 includes a memory 201, a memory control unit 202, a system configuration control unit 203, and plural transfer control units 210, 220, 230, .... The memory control unit 202, the system configuration control unit 203, and the transfer control units 210, 220, 230, ... are connected with one another through an internal bus 204.

The memory 201 stores data shared among the plural servers 100, 100a, .... The memory control unit 202 controls input/output shared data to/from the memory 201. The system configuration control unit 203 controls the configuration of the entire system. The transfer control units 210, 220, 230, ... are connected to the servers 100, 100a, ... through the inter device interface cable groups 10, 20, and 30, respectively. The transfer control units 210, 220, 230, ... communicate with the servers 100, 100a, ... to transmit or receive a command or data.

The inter device interface cable groups 10, 20, and 30 each include plural inter device interface cables. Owing to the inter device interface cables, serial transmission can be carried out.

As described above, the shared memory device 200 controls the system configuration as well as manages shared data among servers. As for the control over the system configuration, for example, processing for confirming whether the servers 100, 100a, ... perform operations normally. It is desired to transmit data shared among the servers 100, 100a, ... at as high speed as possible. In addition, it is desired to transmit or to receive a command regarding the system configuration control with high reliability. In other words, a communication interface between the shared memory device 200 and each of the servers 100, 100a, ... as illustrated in FIG. 2 needs to realize both of high speed transfer and high reliability transfer.

For that purpose, plural transmission paths are provided between the transfer control units to perform serial transmission at high speeds. High speed transmission is realized by dividing target data for transmission and transmitting divided data in parallel on the plural transmission paths. In addition, high reliability transmission is realized by copying a target command for transmission and transmitting the same command on the plural transmission paths in a duplicated manner. The system comprises a transmitter, a receiver and a plurality of paths coupling the transmitter and the receiver, the transmitter being configured to receive a write command and data, and transmitting the write command and the data to the receiver, the receiver being coupled to a memory and being configured to store the data into the memory upon successful receipt of the write command.

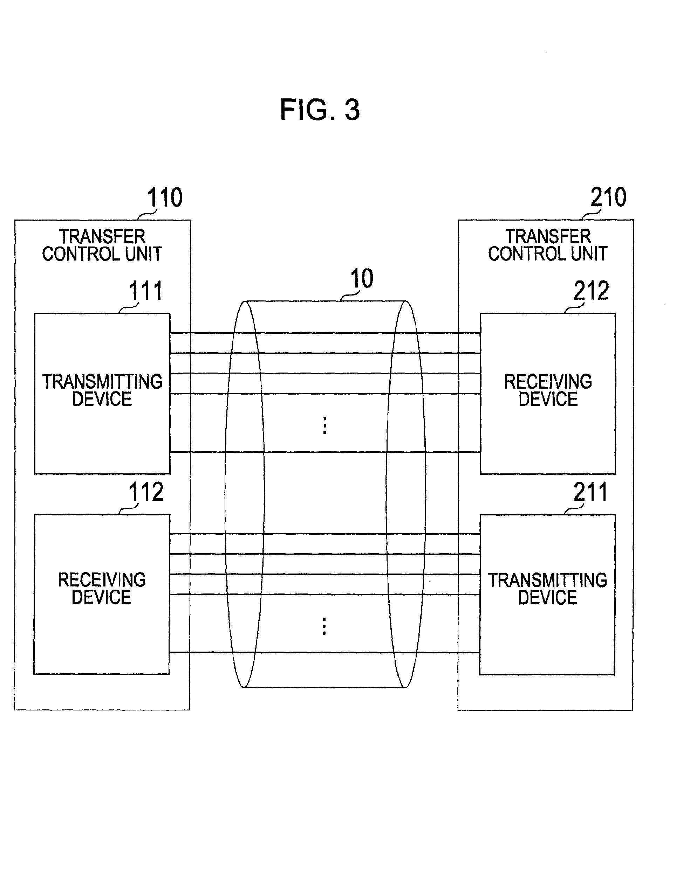

FIG. 3 illustrates how the transmission control units are connected together. FIG. 3 illustrates connection between the transfer control unit 110 of the server 100 and the transfer control unit 210 of the shared memory device 200.

The transmitting device 111 in the transfer control unit 110 and the receiving device 212 in the transfer control unit 210 are connected through plural inter device interface cables in the inter device interface cable group 10. Likewise, the transmitting device 211 in the transfer control unit 210 and the receiving device 112 in the transfer control unit 110 are connected through plural inter device interface cables in the inter device interface cable group 10.

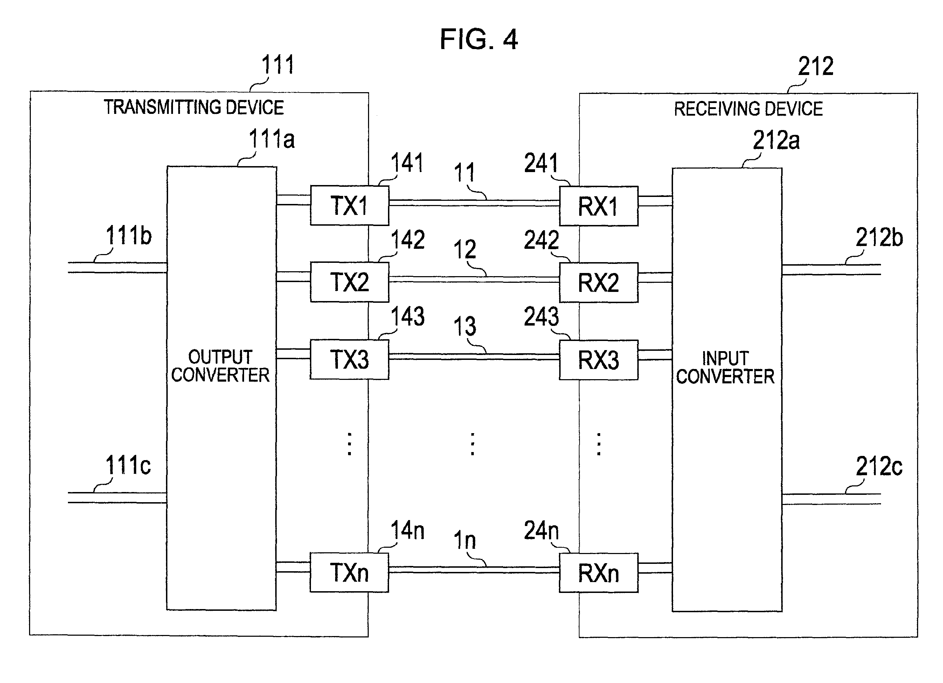

FIG. 4 is a detailed diagram of the interface between the transmitting device and the receiving device. The transmitting device 111 includes an output converter 111a. The output converter 111a is connected with a transmitting side command bus 111b and a transmitting side storage data bus 111c. The transmitting side command bus 111b is an internal bus for transmitting a command to the shared memory device 200. The transmitting side storage data bus 111c is an internal bus for transmitting data to be stored in the shared memory device 200.

Further, the output converter 111a is connected to plural transmitting modules 141, 142, 143, ..., 14n. The number of transmitting modules 141, 142, 143, ..., 14n are n modules (n is a natural number), and identification information TX1, TX2, TX3, ..., TXn are given to the individual modules. Numerical values following the identification information "TX" are sequential identification numbers beginning with 1, which are assigned to the transmitting modules 141, 142, 143, ..., 14n.

The output converter 111a receives a command regarding the system configuration control through the transmitting side command bus 111b. Reliability is needed in a command transmission. To that end, the output converter 111a generates n command packets including the received command. Then, the output converter 111a outputs each of the generated command packets to the transmitting modules 141, 142, 143, ..., 14n. The transmitting modules 141, 142, 143, ..., 14n convert the input command packets into serial signals. Then, the transmitting modules 141, 142, 143, ..., 14n transmit the converted serial signals to the receiving device through the inter device interface cables 11, 12, 13, ..., 1n.

Further, the output converter 111a receives storage data through the transmitting side storage data bus 111c. The storage data influences performance of the system and thus needs to be transmitted at a high speed. Therefore, the output converter 111a divides the storage data by a predetermined data length (for example, 512 bytes) into plural unit data. Then, the output converter 111a assigns the unit data to each of the transmitting modules having the identification information "TX1" to "TX(n-1)". The output converter 111a assigns redundant data for use in restoration corresponding to "n-1" unit data to the transmitting module having the identification information "TXn". Moreover, the output converter 111a combines a predetermined number of assigned unit data to generate a storage data packet for each of the transmitting modules 141, 142, 143, ..., 14n. Then, the output converter 111a outputs a corresponding storage data packet to each of the transmitting modules 141, 142, 143, ..., 14n. The transmitting modules 141, 142, 143, ..., 14n each convert the input storage data packet into a serial signal. Then, the transmitting modules 141, 142, 143, ..., 14n transmit the storage data packet being converted into the serial signal to the receiving device 212 through the inter device interface cables 11, 12, 13, ..., 1n.

The receiving device 212 includes an input converter 212a. The input converter 212a is connected with a receiving side command bus 212b and a receiving side storage data bus 212c. The receiving side command bus 212b is an internal bus for transmitting a command to be sent to the system configuration control unit 203. The receiving side storage data bus 212c is an internal bus for transmitting data to be stored in the memory 201.

Further, the input converter 212a is connected to plural receiving modules 241, 242, 243, ..., 24n. The number of receiving modules 241, 242, 243, ..., 24n is n (n is a natural number), and identification information RX1, RX2, RX3, ..., RXn are given to the individual modules. Numerical values following the identification information "RX" are sequential identification numbers beginning with 1, which are assigned to the receiving modules 241, 242, 243, ..., 24n.

The receiving modules 241, 242, 243, ..., 24n receive the packets each converted to the serial signal from the inter device interface cables 11, 12, 13, ..., 1n. Then, the receiving modules 241, 242, 243, ..., 24n analyze the serial signals to compose packets and transfer the packets to the input converter 212a.

The input converter 212a acquires the packets sent from the transmitting device 111 through the receiving modules 241, 242, 243, ..., 24n. Then, the input converter 212a determines whether each of the acquired packets is a command packet or storage data packet. If the acquired packets are command packets, the input converter 212a selects only the first command packet from the packets normally received with the receiving modules 241, 242, 243, ..., 24n. The input converter 212a discards the second and subsequent commands. Then, the input converter 212a transmits only command data included in the selected command packet to the system configuration control unit 203 through the receiving side command bus 212b.

On the other hand, if the acquired packets are storage data, the input converter 212a extracts unit data from the storage data packets received from each of the receiving modules 241, 242, 243, ..., 24n, and reconstructs the storage data. Then, the input converter 212a transmits the acquired storage data to the memory control unit 202 through the receiving side storage data bus 212c.

Next, the internal configuration of the output converter 111a is described in detail.

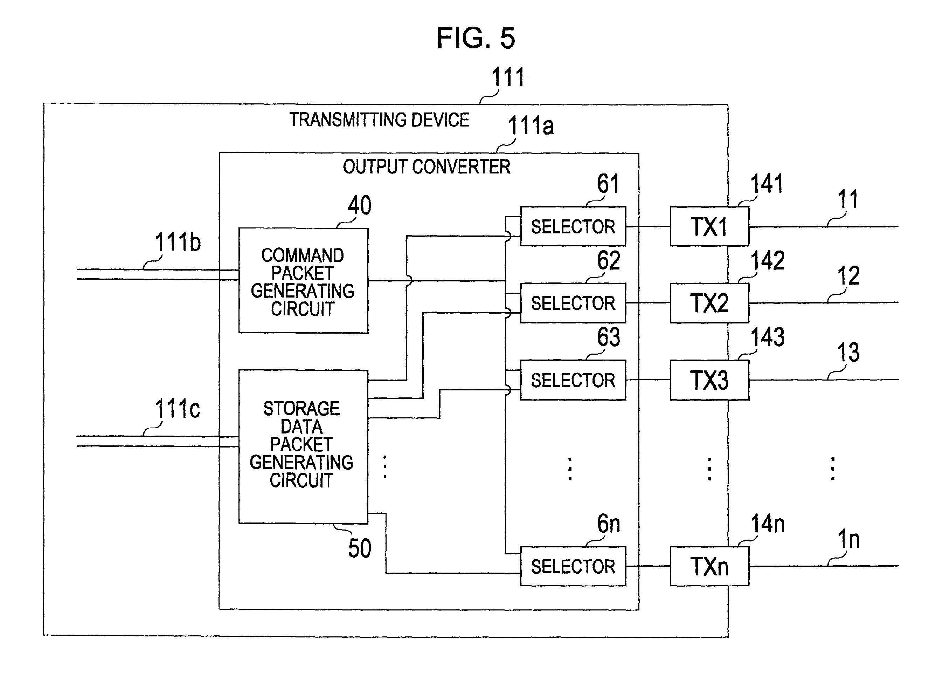

FIG. 5 illustrates the internal configuration of the output converter. The output converter 111a includes a command packet generating circuit 40, a storage data packet generating circuit 50, and selectors 61, 62, 63, ..., 6n.

An input side terminal of the command packet generating circuit 40 is connected to the transmitting side command bus 111b. Further, one output side terminal of the command packet generating circuit 40 is connected to the selectors 61, 62, 63, ..., 6n. The command packet generating circuit 40 receives command data through the transmitting side command bus 111b. The command packet generating circuit 40 generates one command packet based on the received command data. Then, the command packet generating circuit 40 transmits the generated command packet to each of the selectors 61, 62, 63, ..., 6n, respectively.

An input side terminal of the storage data packet generating circuit 50 is connected to the transmitting side storage data bus 111c. In addition, n output side terminals of the storage data packet generating circuit 50 are connected to the selectors 61, 62, 63, ..., 6n. The storage data packet generating circuit 50 receives storage data through the transmitting side storage data bus 111c. The storage data packet generating circuit 50 generates n storage data packets based on the received storage data. Then, the storage data packet generating circuit 50 transmits the generated storage data packets one by one towards the selectors 61, 62, 63, ..., 6n. In other words, one of the n generates storage data packets is transmitted to each of the selectors 61, 62, 63, ..., 6n. Further, each of the generated storage data packets is connected to a corresponding selector.

The selectors 61, 62, 63, ..., 6n transfer the input command packets or storage data packets to a corresponding one of the transmitting modules 141, 142, 143, ..., 14n. To elaborate, if the selectors 61, 62, 63, ..., 6n that have received neither command packets nor storage data packets receive either packets, the received packets are transferred to the transmitting modules 141, 142, 143, ..., 14n. Further, if receiving either one of command packets and storage data packets during transfer of the other one, the selectors 61, 62, 63, ..., 6n temporarily stop transfer of the additionally received packets. Then, after the completion of transfer of the currently transferred packets, the selectors 61, 62, 63, ..., 6n resume the suspended transfer of the packets.

When command data is input to the thus configured output converter 111a through the transmitting side command bus 111b, the command packet generating circuit 40 converts the data into one command packet based on the command data. Then, the generated command packet is transmitted to each of the selectors 61, 62, 63, ..., 6n. The transmitted command packet is transferred to each of the transmitting modules 141, 142, 143, ..., 14n through the selectors 61, 62, 63, ..., 6n, respectively. After that, the transmitting modules 141, 142, 143, ..., 14n send the command packets of the same content toward the inter device interface cables 11, 12, 13, ..., In.

Further, if the output converter 111a receives storage data through the transmitting side storage data bus 111c, the storage data packet generating circuit 50 generates n storage data packets based on the storage data. Then, the generated storage data packets are transmitted to each of the selectors 61, 62, 63, ..., 6n. The transmitted storage data packets are transferred toward the transmitting modules 141, 142, 143, ..., 14n through the selectors 61, 62, 63, ..., 6n, respectively. After that, the individual storage data packets are sent from the transmitting modules 141, 142, 143, ..., 14n toward the inter device interface cables 11, 12, 13, ..., 1n. The transmitter comprises a plurality of transmitting units for transmitting the write command and the data, each of the transmitting units being connected to each of the paths, a dividing unit for receiving and dividing the data into a plurality of segments, and enabling each of the transmitting units to transmit each of the segments of data via each of the paths through the receiver, respectively, and a duplicating unit for receiving and duplicating the write command, and enabling each of the transmitting units to transmit each of the duplicated write commands via each of the paths through the receiver.

Next, a procedure of processing executed in the command packet generating circuit 40, the storage data packet generating circuit 50, and the selectors 61, 62, 63, ..., 6n is described.

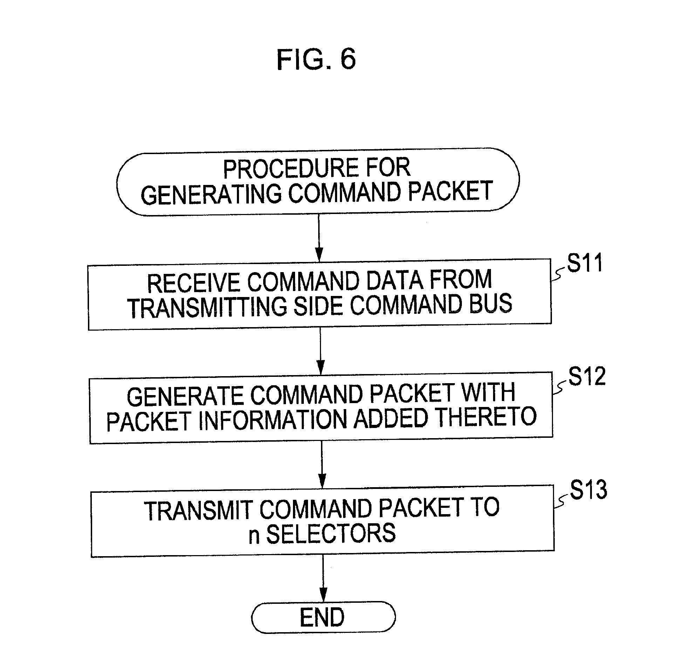

FIG. 6 is a flowchart illustrating a procedure of command packet generating processing. Hereinbelow, the processing illustrated in FIG. 6 will be described in sequential order of steps.

[Step S11] The command packet generating circuit 40 receives command data from the transmitting side command bus 111b.

[Step S12] The command packet generating circuit 40 generates a command packet by adding packet information to the received packet information. Here, the packet information includes a packet identification number and the like.

[Step S13] The command packet generating circuit 40 transmits the command packet to the n selectors 61, 62, 63, ..., 6n.

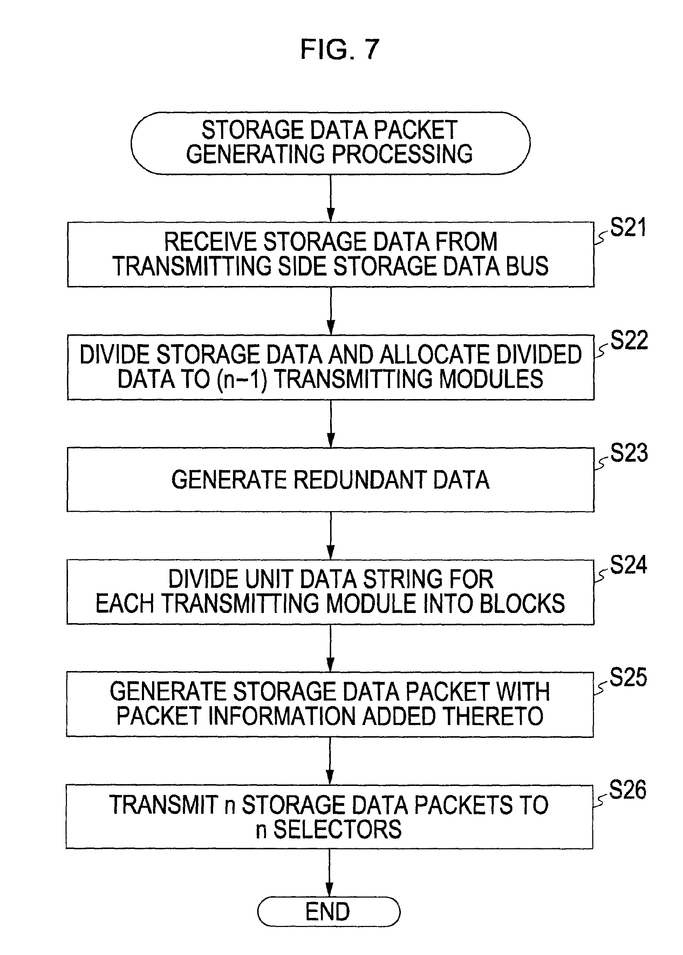

FIG. 7 is a flowchart illustrating a procedure of storage data packet generating processing. Hereinbelow, the processing illustrated in FIG. 7 will be described in sequential order of steps.

[Step S21] The storage data packet generating circuit 50 receives storage data from the transmitting side storage data bus 111c.

[Step S22] The storage data packet generating circuit 50 divides storage data and assigns the divided data to (n-1) transmitting modules. More specifically, the storage data packet generating circuit 50 divides storage data into unit data of a predetermined data length and assigns the unit data to (n-1) transmitting modules (transmitting modules having identification information "TX1" to "TX(n-1)") in order from the top. The array of unit data sorted to the individual transmitting modules corresponds to a data string for each transmitting module.

[Step S23] The storage data packet generating circuit 50 generates redundant data for use in restoration. To be specific, the storage data packet generating circuit 50 generates one redundant data for use in restoration with the same size as the unit data based on each of the unit data assigned to the transmitting modules. Such redundant data for use in restoration is generated in a number corresponding to the number of unit data assigned to the (n-1) transmitting modules. In other words, a restoration use redundant data string is generated with the redundant data for use in restoration being arrayed.

[Step S24] The storage data packet generating circuit 50 divides a unit data string or restoration use redundant data string generated for each transmitting module into blocks of a predetermined length. Each block includes a predetermined number of unit data or redundant data for use in restoration.

[Step S25] The storage data packet generating circuit 50 generates a storage data packet for each transmitting module by adding packet information to each block. The storage data packet for each transmitting module includes one or more blocks. The packet information includes a packet identification number. Storage data packets generated for each transmitting module have a common packet identification number.

[Step S26] The storage data packet generating circuit 50 transmits n storage data packets to n selectors, respectively.

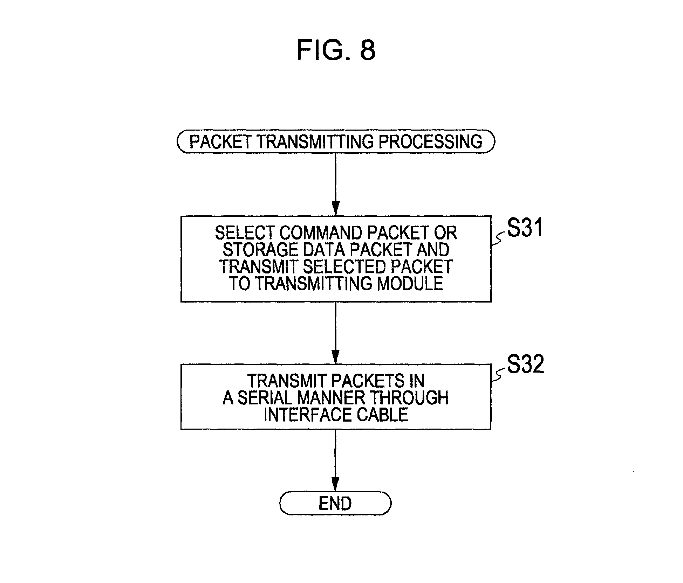

FIG. 8 is a flowchart illustrating a procedure for packet transmitting processing. Hereinbelow, the processing illustrated in FIG. 8 will be described in sequential order of steps.

[Step S31] When receiving command packets or storage data packets, the selectors 61, 62, 63, ..., 6n select the input packets. If command packets or storage data packets are input at the same time, the selectors 61, 62, 63, ..., 6n select the packets in the order received. Then, the selectors 61, 62, 63, ..., 6n each transfer the selected packets to a corresponding one of the transmitting modules 141, 142, 143, ..., 14n.

[Step S32] The transmitting modules 141, 142, 143, ..., 14n transmit the received packets in a serial manner through the inter device interface cables 11, 12, 13, ..., 1n.

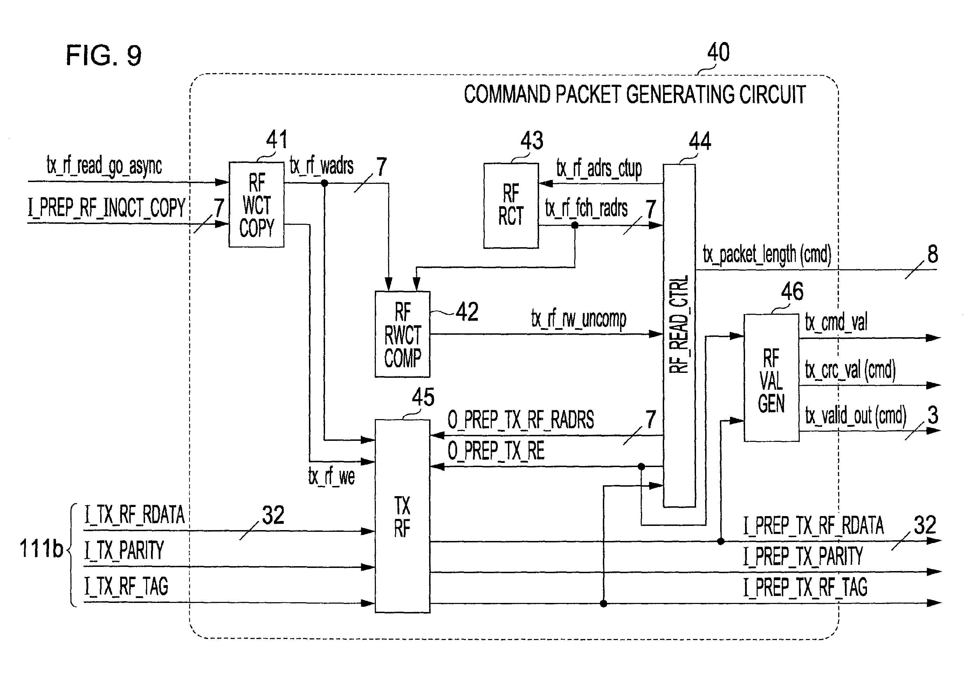

Next, an internal circuit of the output converter 111a is described with reference to FIG. 9, FIG. 10 and FIGs. 11A and 11B.

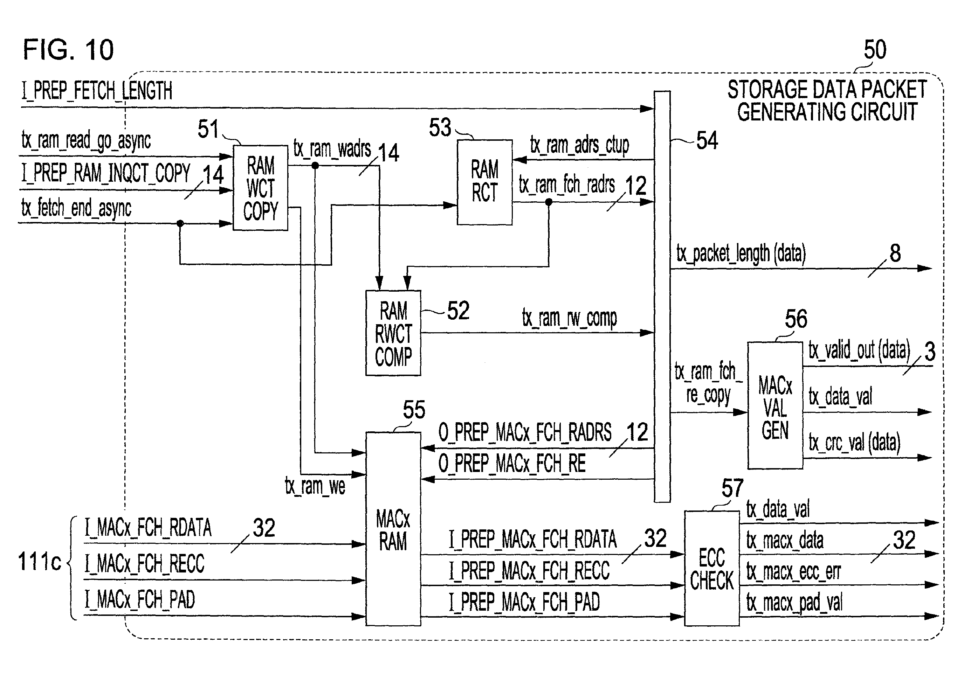

FIG. 9 is a first diagram illustrating the internal circuit of the output converter. In FIG. 9, a numerical number assigned to the line indicating a signal together with the transverse line represents the number of signal lines (the same applies to FIG. 10, FIGs. 11A, 11B, and FIGs. 19 to 22).

FIG. 9 illustrates a main part of the command packet generating circuit 40. A write address circuit (RF_WCT_COPY) 41 receives a write address valid signal (tx_rf_read_go_async) and a write address (I_PREP_RF_INQCT_COPY). The write address valid signal (tx_rf_read_go_async) indicates that the write address (I_PREP_RF_INQCT_COPY) is valid. The write address (I_PREP_RF_INQCT_COPY) is a signal representing a write address of a transmission command buffer 45. The write address circuit 41 generates a write address of the transmission command buffer 45 based on the write address valid signal (tx_rf_read_go_async) or the write address (I_PREP_RF_INQCT_COPY). The write address circuit 41 outputs a write address (tx_rf_wadrs) and a write enable signal (tx_rf_we).

A comparison circuit (RF_RWCT_COMP) 42 receives the write address (tx_rf_wadrs) output from the write address circuit 41 and a read address (tx_rf_fch_radrs) output from a read address circuit (RF_RCT) 43. The comparison circuit 42 determines whether the write address (tx_rf_wadrs) matches the read address (tx_rf_fch_radrs). If the addresses do not match each other, the comparison circuit 42 outputs a mismatch signal (tx_rf_rw_uncomp).

The read address circuit 43 receives a read address increment signal (tx_rf_adrs_ctup) output from a transmission command buffer control circuit (RF_READ_CTRL) 44. The read address increment signal (tx_rf_adrs_ctup) represents an instruction to increment a read address of the transmission command buffer (TX_RF) 45. Each time the read address increment signal is input, the read address circuit 43 increments a value of the read address to be output. Then, the read address circuit 43 outputs the incremented read address (tx_rf_fch__radrs).

The transmission command buffer control circuit 44 receives the read address (tx_rf_fch_radrs) output from the read address circuit 43 and the mismatch signal (tx_rf_rw_uncomp) output from the comparison circuit 42. The transmission command buffer control circuit 44 makes an instruction to sequentially read data from the transmission command buffer 45 when the mismatch signal (tx_rf_rw_uncomp) is input. In other words, the transmission command buffer control circuit 44 outputs a read address (0_PREP_TX_RF_RADRS) of the same value as the read address (tx_rf_fch_radrs) received from the read address circuit 43 and a read enable signal (0_PREP_TX_RE) to the transmission command buffer 45. After that, the transmission command buffer control circuit 44 outputs the read address increment signal (tx_rf_adrs_ctup) to the read address circuit 43.

From then on, if the mismatch signal (tx_rf_rw_uncomp) is input, the transmission command buffer control circuit 44 repeatedly outputs the read address (0_PREP_TX_RF_RADRS) and the read enable signal (0_PREP_TX_RE). If no mismatch signal (tx_rf_rw_uncomp) is input, the write address (tx_rf_wadrs) of the transmission command buffer 45 matches the read address (tx_rf_fch_radrs). In other words, since the command data written to the transmission command buffer 45 are all read out, processing for counting up read addresses with the transmission command buffer control circuit 44 is stopped.

Further, the transmission command buffer control circuit 44 calculates a data length of one packet (command packet length) based on the number of times the read address is incremented. Then, the transmission command buffer control circuit 44 outputs command packet length data (tx_packet_length (cmd)).

The transmitting side command bus 111b is used for input to the transmission command buffer 45. Data input through the transmitting side command bus 111b includes transmission data (I_TX_RF_RDATA), a parity value (I_TX_PARHY), and added data (I_TX_RF_TAG). Further, the transmission command buffer 45 receives the write address (tx_rf_wadrs) and write enable signal (tx_rf_we) output from the write address circuit 41. If receiving the write enable signal (tx_rf_we), the transmission command buffer 45 stores data received through the transmitting side command bus 111b in a storage area specified by a corresponding write address (tx_rf_wadrs).

Moreover, the transmission command buffer 45 receives the read address (0_PREP_TX_RF_RADRS) and read enable signal (0_PREP_TX_RE) output from the transmission command buffer control circuit 44. When receiving the read enable signal (0_PREP_TX_RE), the transmission command buffer 45 reads data from a storage area specified by a corresponding read address (0_PREP_TX__RF_RADRS) and outputs the read data. The output data includes read data (I_PREP_TX_RF_RDATA), a parity value (I_PREP_TX_PARITY), and added data (I_PREP_TX_RF_TAG).

A valid signal generating circuit (RF_VAL__GEN) 46 receives the read enable signal (0_PREP_TX_RE) output from the transmission command buffer control circuit 44 and the read data (I_PREP_TX_RF_RDATA) output from the transmission command buffer 45. The valid signal generating circuit 46 generates a valid signal as a signal that validates the read data (I_PREP_TX_RF_RDATA) output from the transmission command buffer 45 in accordance with the read enable signal (O_PREP_TX_RE). Then, the valid signal generating circuit 46 outputs a valid signal for a transmission command (tx_cmd_val), a valid signal coded for each type of transmission commands (tx_valid_out (cmd)), and a timing signal as a target for CRC (Cyclic Redundancy Check) in a transmission command.

FIG. 10 is a second diagram illustrating the internal circuit of the output converter. FIG. 10 illustrates a main part of the storage data packet generating circuit 50.

A write address circuit (RAM_WCT_COPY) 51 receives a write address valid signal (tx_ram_read_go async), a write address (I_PREP_RAM_INQCT_COPY), and an end-of-address increment signal (tx_fetch_end_async). The write address valid signal (tx_ram_read_go_async) indicates that the write address (I_PREP_RAM_INQCT_COPY) is valid. The write address (I_PREP_RAM_INQCT_COPY) is a signal representing a write address of a transmission storage data buffer 55. The end of address increment signal (tx_fetch_end_async) is an instruction to terminate incrementing the write address of the transmission storage data buffer 55. The write address circuit 51 generates a write address of the transmission storage data buffer 55. More specifically, if the write address valid signal (tx_ram_read_go_async) is input to the write address circuit 51, the write address (I_PREP_RAN_INQCT_COPY) is sent to a write address (tx_ram_wadrs) as well as a write enable signal (tx_ram_we) is output until the end of address increment signal (tx_fetch_end_async) is input. Further, if receiving the write address (I_PREP_RAM_INQCT_COPY), the write address circuit 51 sets the designated address as a write address thereof.

A comparison circuit 52 receives the write address (tx_ram_wadrs) output from the write address circuit 51 and the read address (tx_ram_fch_radrs) output from the read address circuit (RAM_RCT) 53. The comparison circuit 52 determines whether the write address (tx_ram_wadrs) matches the read address (tx_ram_fch_radrs). If the addresses match each other, the comparison circuit 52 outputs a match signal (tx_ram_rw_comp).

The read address circuit 53 receives the end of address increment signal (tx_fetch_end_async), and a read address increment signal (tx_ram_adrs_ctup) output from a transmission storage data buffer control circuit 54. The read address increment signal (tx_ram_adrs_ctup) is an instruction to increment a read address of the transmission storage data buffer 55. A read address circuit 53 increments a value of a read address to be output each time the read address increment signal is input until the end sof address increment signal (tx_fetch_end_async) is input. Then, the read address circuit 53 outputs the incremented read address (tx_ram_fch_radrs).

The transmission storage data buffer control circuit 54 receives a fetch data length (I_PREP_FETCH_LENGTH), the read address (tx_ram_fch_radrs) output from the read address circuit 53, and a match signal (tx_ram_rw_comp) output from the comparison circuit 52. If the match signal (tx_ram_rw_comp) is not input, the transmission storage data buffer control circuit 54 makes an instruction to sequentially read data from the transmission storage data buffer 55. In other words, the transmission storage data buffer control circuit 54 outputs a read address (O_PREP_MACx_FCH_RADRS) of the same value as the read address (tx_ram_fch_radrs) received from the read address circuit 53 and a read enable signal (O_PREP_ MACx_FCH_RE) to the transmission storage data buffer 55. After that, the transmission storage data buffer control circuit 54 outputs the read address increment signal (tx_ram_adrs_ctup) to the read address circuit 53.

The transmission storage data buffer control circuit 54 repeatedly outputs the read address (O_PREP_MACx_FCH_RADRS) and the read enable signal (O_PREP_ MACx_FCH_RE) until the length of data read from the transmission storage data buffer 55 reaches the fetch data length (I_PREP_FETCH_LENGTH). Further, the transmission storage data buffer control circuit 54 outputs a copy signal (tx_ram_fch_re_copy) of the read enable signal (0_PREP_ MACx_FCH_RE).

Further, the transmission storage data buffer control circuit 54 calculates a data length of one packet (storage data packet length) based on the number of times the read address is incremented. Then, the transmission storage data buffer control circuit 54 outputs storage data packet length data (tx_packet_length (data)).

The transmitting side storage data bus 111c is used for input to the transmission storage data buffer 55. Data input through the transmitting side storage data bus 111c includes transmission data (CMACx_FCH_RDATA), an ECC (Error Correcting Code) value (CMACx_FCH_RECC), and added data (I_MACx_FCH_PAD). Further, the transmission storage data buffer 55 receives the write address (tx_rf_wadrs) and write enable signal (tx_ram_we) output from the write address circuit 51. If receiving the write enable signal (tx_ram_we), the transmission storage data buffer 55 stores data received through the transmitting side storage data bus 111c in a storage area specified by a corresponding write address (tx_rf_wadrs).

Moreover, the transmission storage data buffer 55 receives the read address (O_PREP_MACx_FCH_RADRS) and read enable signal (O_PREP_MACx_FCH_RE) output from the transmission storage data buffer control circuit 54. When receiving the read enable signal (O_PREP_MACx_FCH_RE), the transmission storage data buffer 55 reads data from a storage area specified by a corresponding read address (O_PREP_MACx_FCH_RADRS) and outputs the read data. The output data includes read data (I_PREP_MACx_FCH_RDATA), an ECC value (I_PREP_MACx_FCH_RECC), and added data (I_PREP_MACx_FCH_PAD).

A valid signal generating circuit (MACx_VAL_GEN) 56 receives a copy signal of the read enable signal (tx_ram_fch_re_copy) output from the transmission storage data buffer control circuit 54. The valid signal generating circuit 56 generates a valid signal if a copy signal (tx_ram_fch_re_copy) is input. Then, the valid signal generating circuit 56 outputs a valid signal for transmission storage data (tx_data_val), a valid signal coded for each type of transmission storage data (tx_valid_out (data)), and a timing signal as a target for CRC in transmission storage data.

An ECC check circuit 57 receives the read data (I_PREP_MACx_FCH_RDATA), ECC value (I_PREP_MACx_FCH RECC), and added data (I_PREP_MACx_FCH_PAD) output from the transmission storage data buffer 55. The ECC check circuit 57 performs ECC check on the data read from the transmission storage data buffer 55. Then, the ECC check circuit 57 outputs transmission data having passed the ECC check. Data to be transmitted includes a valid value (tx_data_val) of data read from the transmission storage data buffer 55 and subjected to ECC check, data (tx_macx_data) read from the transmission storage data buffer 55 and subjected to ECC check, added data (tx_macx_pad_val) in the transmission storage data buffer 55, which is subjected to ECC check, and an error detection signal generated upon ECC check (tx_macx_ecc_err).

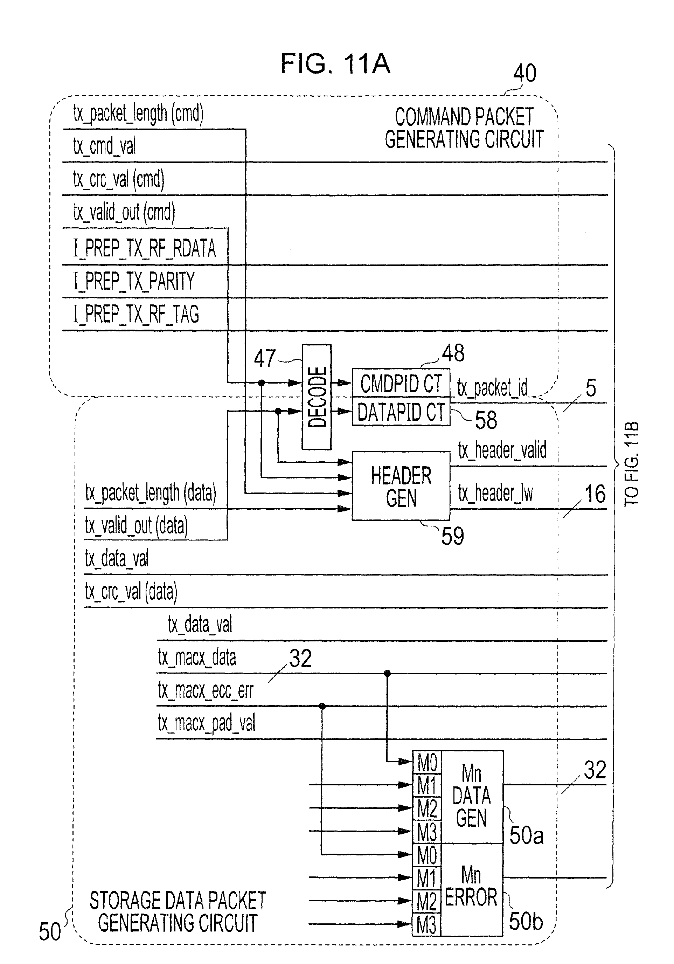

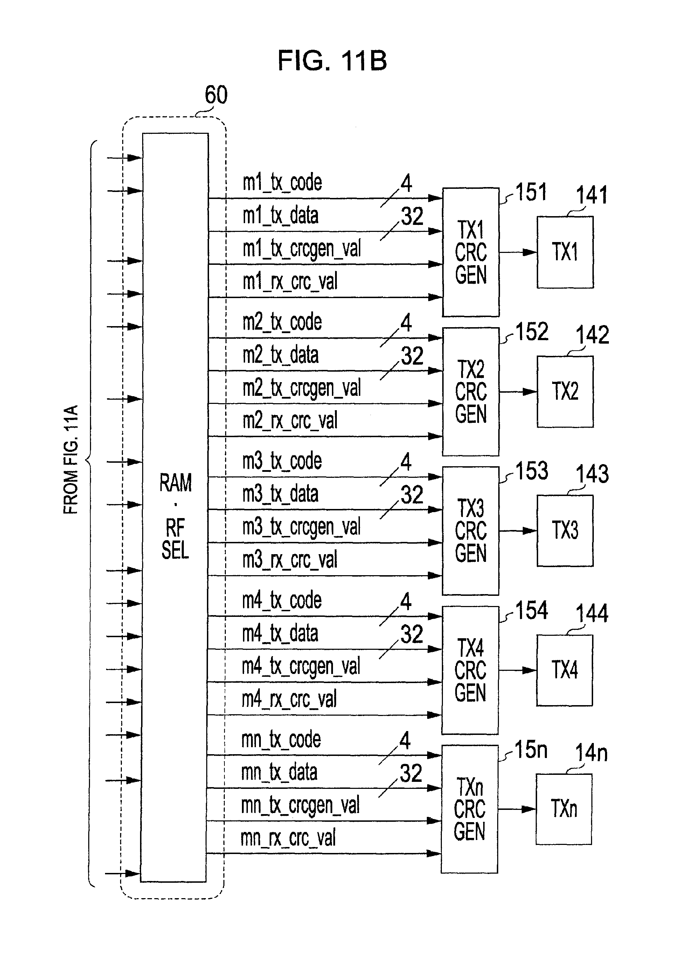

FIGs. 11A and 11B are third diagrams illustrating the internal circuit of the output converter. FIGs. 11A and 11B illustrate connections between some components of the command packet generating circuit 40, some components of the storage data packet generating circuit 50, and a selector group (RAM·RF_SEL) 60. Here, the selector group 60 is a generic name for the selectors 61, 62, 63, ..., 6n.

A decoder (DECODE) 47 of the command packet generating circuit 40 receives a valid signal (tx_valid_out (cmd)) for command data output from the valid signal generating circuit 46 and a valid signal (tx_valid_out (data)) for transmission storage data output from the valid signal generating circuit 56. The decoder 47 outputs decoded data.

A command packet identification number generating circuit (CMDPID_CT) 48 receives a valid signal (tx_valid_out (cmd)) for command data decoded with the decoder 47. The command packet identification number generating circuit 48 generates a packet identification number for a command packet in response to the valid signal (tx_crc_val (cmd)). Then, the command packet identification number generating circuit 48 outputs the generated packet identification number (tx_packet_id).

A storage data packet identification number generating circuit (DATAPID_CT) 58 receives a valid signal (tx_valid_out (data)) for command data decoded with the decoder 47. The storage data packet identification number generating circuit 58 generates a packet identification number for a storage data packet in response to the valid signal (tx_valid_out (data)). Then, the storage data packet identification number generating circuit 58 outputs the generated packet identification number (tx_packet_id).

A header generating circuit (HEADER_GEN) 59 receives the valid signal (tx_valid_out (cmd)) for command data output from the valid signal generating circuit 46, the valid signal (tx_valid_out (data)) for storage data output from the valid signal generating circuit 56, the command packet length data (tx_packet_length (cmd)) output from the transmission command buffer control circuit 44, and the storage data packet length data (tx_packet_length (data)) output from the transmission storage data buffer control circuit 54. The header generating circuit 59 generates header information for a command packet and a storage data packet and in addition, generates a valid signal for header information. The header generating circuit 59 outputs a valid signal (tx_header_vatid) for header information and header information (tx_header_lw).

A redundant data generating circuit (Mn_DATA_GEN) 50a receives read data (tx_macx_data) from the transmission storage data buffer 55, which was output from the ECC check circuit 57 and subjected to ECC check. The input data is generated for (n-1) selectors. The redundant data generating circuit 50a generates redundant data for use in restoration based on the input data (tx_macx_data). Then, the redundant data generating circuit 50a outputs the redundant data for use in restoration to each selector.

A redundant data generation disable circuit (Mn_ERR_OR) 50b receives an error detection signal (tx_macx_ecc_err) for use in ECC check, which is output from the ECC check circuit 57. The input data is generated for (n-1) selectors. The redundant data generation disable circuit 50b determines whether an error occurs in the data based on the error detection signal (tx_macx_ecc_err). If any error is detected, an error signal indicating that redundant data for use in restoration may not be generated is output to each selector.

The selector group 60 includes the plural selectors 61, 62, 63, ..., 6n illustrated in FIG. 5. This selector group 60 receives a valid signal (tx_cmd_val) for a transmission command and timing signal (tx_crc_val (cmd)) output from the valid signal generating circuit 46, all data output from the transmission command buffer 45, a valid signal (tx_data_val) and timing signal (tx_crc_val (data)) output from the valid signal generating circuit 56, and all data output from the ECC check circuit 57. Further, the selector group 60 receives output values from the command packet identification number generating circuit 48, the storage data packet identification number generating circuit 58, the redundant data generating circuit 50a, and the redundant data generation disable circuit 50b.

Here, data output from the ECC check circuit 57 is distributed to (n-1) selectors 61, 62, 63, .... Further, the data output from the redundant data generating circuit 50a and the redundant data generation disable circuit 50b are input to the selector 6n.

The selector group 60 outputs data to CRC (Cyclic Redundancy Check) generating circuits (TX1_CRC_GEN, TX2_CRC_GEN, TX3_CRC_GEN, TX4_CRC_GEN, ..., TXn_CRC_GEN) 151, 152, 153, 154, ..., 15n provided for the transmitting modules 141, 142, 143, ..., 14n, respectively. The output data includes packet-data-added codes for transmitting module (m1_tx_code, m2_tx_code, m3_tx_code, m4_tx_code, mn_tx_code), packet data for transmitting module (m1_tx_data, m2_tx_data, m3_tx_data, m4_tx_data, mn_tx_data), timing signals of packet data for transmitting module as a target for CRC (m1_tx_crcgen_val, m2_tx_crcgen_val, m3_tx_crcgen_val, m4_tx_crcgen_val, mn_tx_crcgen_val), and timing signals to create CRC for transmitting module (m1_rx_crc_val, m2_rx_crc_val, m3_rx_crc_val, m4_rx_crc_val, mn_rx_crc_val).

CRC generating circuits 151, 152, 152, 154, and 15n generate a CRC based on input data and then output a packet added with the CRC to a corresponding one of the transmitting modules 141, 142, 143, 144, and 14n.

The output converter 111a can be achieved using the above circuit configuration.

Next, a command packet and data packet generated with the output converter 111a are described in detail.

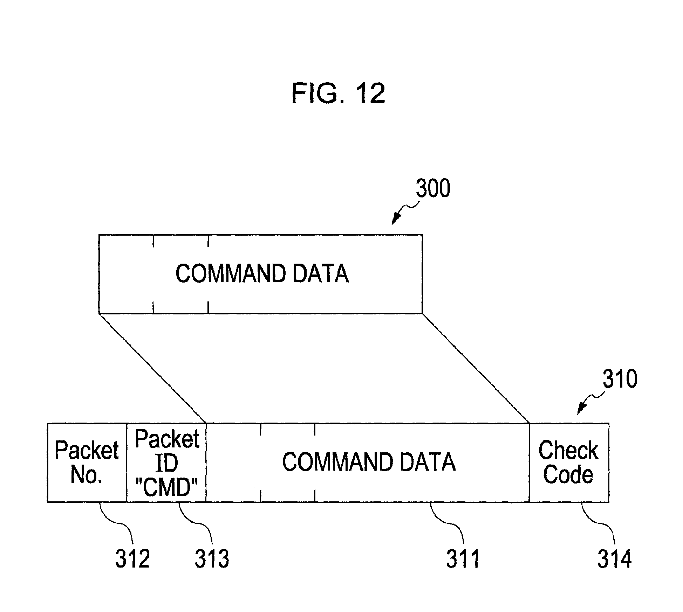

FIG. 12 illustrates data structure of a command packet. The command packet generating circuit 40 generates one command packet 310 based on command data 300. A command packet 310 includes a command data field 311, a packet identification number (Packet No.) field 312, a packet type identifier (PacketID) field 313, and a check code (Check Code) field 314. Information set in the packet identification number field 312, the packet type identifier field 313, and the check code field 314 is packet information.

The command data field 311 stores command data input through the transmitting side command bus 111b.

The packet identification number field 312 stores a sequential number (packet identification number) for uniquely identifying a command packet. For example, a packet identification number is set by a counter that is incremented by 1 each time a command packet is generated. In addition, when the command packet 310 is generated, a value of the counter set at that instant is stored in the packet identification number field 312.

The packet type identifier field 313 stores a packet type identifier as a flag for identifying a packet type. To describe the packet type, packets are classified into command packets and storage data packets. As for the command packet, a value of "CMD" is set as the packet type identifier.

The check code field 314 stores a code (check code) for detecting an error in the command packet.

As described above, the packet information like the packet identification number, the packet type identifier, and the check code is added to the command data 300 to thereby generate the command packet 310.

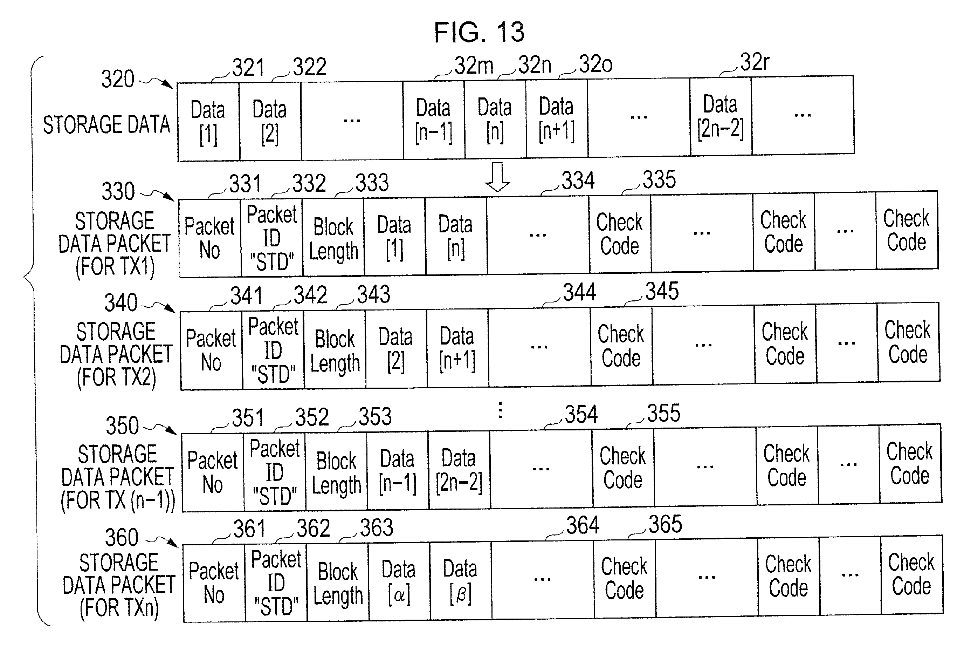

FIG. 13 illustrates a data structure example of a storage data packet. The storage data packet generating circuit 50 generates plural storage data packets 330, 340, ..., 350, and 360 based on input storage data 320. The storage data packet 330 is generated for the transmitting module 141 having identification information "TX1". The storage data packet 340 is generated for the transmitting module 142 having identification information "TX2". The storage data packet 350 is generated for a transmitting module (not illustrated) having identification information "TX(n-1)". The storage data packet 360 is generated for the transmitting module 14n having identification information "TXn".

The storage data 320 is subjected to processing of "data division", "creation of redundant data for use in restoration", and "block division" and then added with packet information with the storage data packet generating circuit 50. Upon "data division", the storage data 320 is divided into plural unit data 321, 322, ..., 32m, 32n, 32o, ..., 32r, .... In the illustrated example in FIG. 13, the unit data are assigned with sequential identification numbers beginning with 1 in ascending order from the top of the storage data 320.

The unit data 321, 322, ..., 32m, 32n, 32o, ..., 32r, ... are equally sorted to the (n-1) transmitting modules having identification information "TX1" to "TX(n-1)" in order from the top.

Provided that the unit data are numbered in order from the top like Data[1], Data[2], Data[3], ..., the unit data are sorted to the (n-1) transmitting modules having identification information "TX1" to "TX(n-1)" as follows.
TX1 = Data[1], ..., Data[n], ...
TX2 = Data[2], ..., Data[n+1], ...
.
.
TX(n-1) = Data[n-1], ..., Data[2n-2], ...

The unit data sorted to each transmitting module constitutes a unit data string for each transmitting module.

After that, processing of "creation of redundant data for use in restoration" is performed. The "creation of redundant data for use in restoration" means to create redundant data for use in restoration for the transmitting module having identification information "TXn". The redundant data for use in restoration is obtained by performing exclusive OR of data stored at the same timing in the other transfer modules on a bit-to-bit basis. Here, the data stored at the same timing refer to unit data assigned with the same number in each storage data packet. Provided that the sign of logical exclusive OR is "∀'", an operation expression for redundant data for use in restoration (Data[α], Data[β], ...) is as follows.
TXn = Data[α], Data[β], ...
Data[α] = Data[1]∀Data[2]∀, ..., ∀Data[n-1]
Data[β] = Data[n]∀Data[n+1]∀, ..., ∀Data[2n-2]

The created redundant data for use in restoration are sorted to the transmission module having identification information "TXn". Then, the sorted redundant data for use in restoration constitute restoration use redundant data string.

The unit data string and restoration use redundant data string assigned to each transmission module are each subjected to the processing of "block division". The "block division" refers to processing for dividing the unit data string for each transfer module and the created restoration use redundant data string into fixed length blocks. The size of each block is equal to the integral multiple of the size of the unit data (equal to the size of the redundant data for use in restoration). In other words, one block includes one or more unit data or redundant data for use in restoration.

After the "block division", the unit data string or restoration use redundant data divided into blocks is added with packet information to thereby generate storage data packets 330, 340, 350, and 360.

The storage data packets 330, 340, 350, and 360 include packet identification number (Pacekt No.) fields 331, 341, 351, and 361, packet type identifier (PacketID) fields 332, 342, 352, and 362, block length (Block Length) fields 333, 343, 353, and 363, block fields 334, 344, 354, and 364, and check code fields 335, 345, 355, and 365.

The packet identification number fields 331, 341, 351, and 361 store sequential numbers (packet identification numbers) for identifying a packet for transmitting the storage data 320. For example, the packet identification numbers are set by a counter that is counted up by 1 each time a series of processes for generating the storage data packets 330, 340, ..., 350, and 360 is executed. At the time of generating the storage data packets 330, 340, ..., 350, and 360, a corresponding counter value is stored in the packet identification number fields 331, 341, 351, and 361. In other words, the same packet identification number is stored in the storage data packets 330, 340, ..., 350, and 360 in order to determine whether a target packet is obtained by dividing the storage data 320.

The packet type identifier fields 332, 342, 352, and 362 store flags (packet type identifiers: Packet IDs) for identifying the type of packet. To describe the type of packet, packets are classified into command packets and storage data packets. As for the storage data packet, a value of "STD" is set as the packet type identifier.

The length of data to the next check code field (block length) is stored in the block length fields 333, 343, 353, and 363. If data corresponding to one block, which is a predetermined value, is included in the block field, the length of data corresponding to one block as a predetermined value is set in the block length fields 333, 343, 353, and 363. Here, in some cases, an amount of the last block is smaller than the amount corresponding to one block as a predetermined value.

The block fields 334, 344, 354, and 364 store unit data or redundant data for use in restoration corresponding to one block.

The check code fields 335, 345, 355, and 365 store a code for detecting an error in data of a previous block.

The fields of blocks and the fields of check codes alternately appear in accordance with the number of unit data in the storage data 320.

Now, the data structure is described in more detail, focusing on the storage data packet 330 for the transmitting module having identification information "TX1".

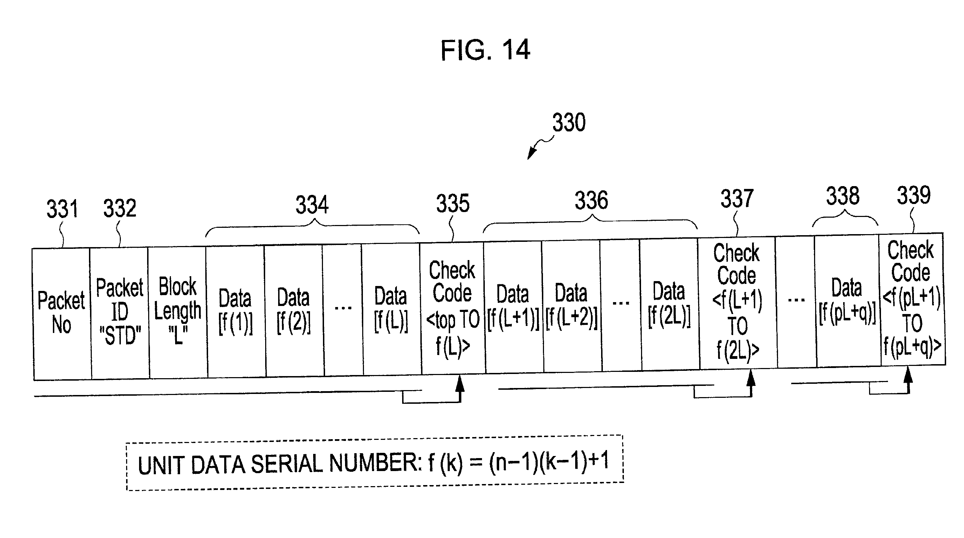

FIG. 14 illustrates the detailed structure of the storage data packet. In the illustrated example of FIG. 14, a value of the block length is represented by "L" (corresponding to "L" unit data). Further, in FIG. 14, the sequential number of unit data obtained by dividing the storage data 320 is expressed by the function expression "f(k)". This function expression is defined as follows: f(k) = (n-1)(k-1)+1 where k represents a natural number representing the sequence of unit data in the storage data 320, and n represents a natural number representing the number of transmitting modules. As for the first unit data (k = 1) in the storage data 320, the sequential number of the unit data is "f(k) = 1". As for the second and subsequent ones, a value of f(k) is increased by (n-1) each time a value of k is incremented by 1.

In the first block field 334 of the storage data packet 330, L unit data are stored. In addition, in the first check code field 335, check codes for checking an error in data from the top of the storage data packet 330 up to the end of the block field 334 are stored.

In the second block field 336, L unit data are stored. In the second check code field 337, check codes for checking data in the block field 336 are stored. Following these, block fields and check code fields alternately appear. In the illustrated example of FIG. 14, a (p-1)th block field 338 (p is a natural number) is the last block field.

The last block field 338 store L or less unit data. In the illustrated example of FIG. 14, q unit data (q is a natural number not larger than L) are stored in the block field 338. In a check code field 339 following the last block field 338, a check code for the q unit data stored in the previous block field 338 is stored.

Here, storage data packets for the other transmitting modules have the same value "L" of the block length. If the data length of storage data to be transmitted is known, the optimum value for the data length is preset as the block length.

Next, the internal configuration of the input converter 212a is described in detail.

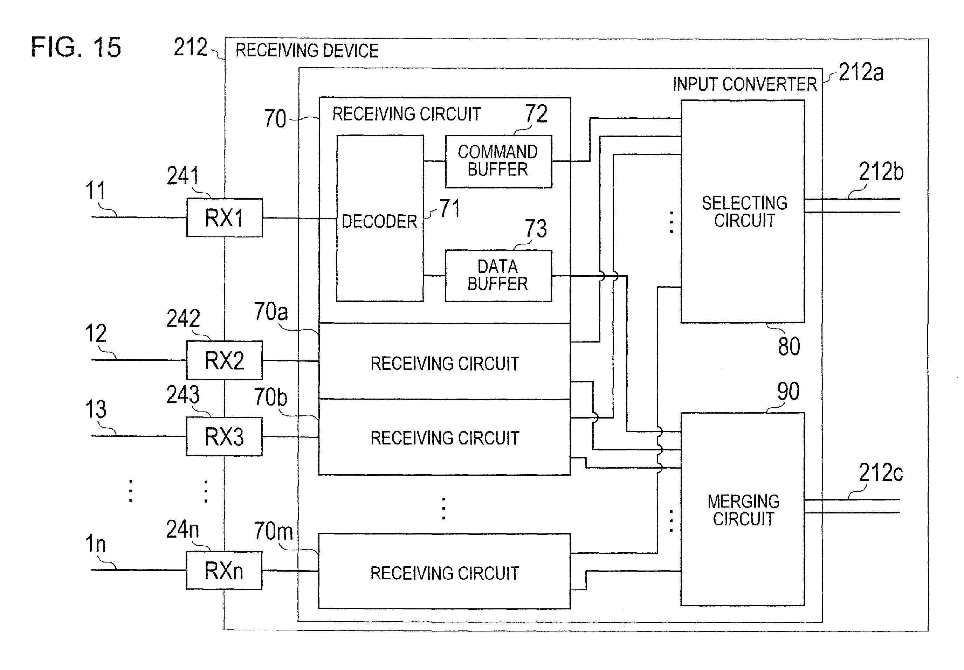

FIG. 15 illustrates the internal configuration of the input converter. The input converter 212a include plural receiving circuits 70, 70a, 70b, ..., 70m, a selecting circuit 80, and a merging circuit 90.

The receiving circuits 70, 70a, 70b, ..., 70m are connected to the receiving modules 241, 242, 243, ..., 24n, respectively. In addition, the receiving circuits 70, 70a, 70b, ..., 70m analyze contents of packets input through the connected receiving modules 241, 242, 243, ..., 24n. If command packets are input, the receiving circuits 70, 70a, 70b, ..., 70m transfer command data extracted from the command packets to the selecting circuit 80. Further, if storage data packets are input, the receiving circuits 70, 70a, 70b, ..., 70m transfer a unit data string extracted from the storage data packets to the merging circuit 90.

The receiving circuit 70 includes a decoder 71, a command buffer 72, and a data buffer 73. The decoder 71 is connected to the receiving module 241. The decoder 71 references a packet type identifier of a packet input from the receiving module 241 to determine the type of the packet. If the input packet is a command packet, the decoder 71 stores corresponding command data in the command buffer 72. If the input packet is a storage data packet, the decoder 71 stores the storage data packet in the data buffer 73.

Further, the decoder 71 has an error check function. In other words, the decoder 71 performs error check on a command packet and a storage data packet. To be specific, the decoder 71 acquires a check code of the command packet to determine whether an error occurs in the command packet. In short, the decoder 71 generates an error check code based on the command packet, and confirms whether the code matches an error check code assigned to the command packet. If the values of the error check codes match each other, it can be concluded that the command packet was normally received. If the values of the error check codes do not match each other, it is concluded that any error occurred. The decoder 71 sets a flag indicating that the error occurs to a command packet involving the error.

Further, the decoder 71 determines whether an error occurs in each block of a storage data packet. More specifically, the decoder 71 generates an error check code based on a unit data string in each block to confirm whether the code matches an error check code assigned to the storage data packet. If the values of the error check codes match each other, it can be concluded that a block was normally received. If the values of the error check codes do not match each other, it is concluded that any error occurred. The decoder 71 sets a flag indicating that the error occurs to a block corresponding to the error check code. The decoder 71 sets a flag indicating that any error occurs to the block involving the error.

The command buffer 72 is a storage device for storing command packets. The command buffer 72 is connected to the selecting circuit 80. Then, command packets stored in the command buffer 72 are output to the selecting circuit 80 in the order received and stored.

The data buffer 73 is a storage device for storing storage data packets. The data buffer 73 is connected to the selecting circuit 80. Then, storage data packets stored in the data buffer 73 are output to the merging circuit 90 in the order received and stored.

The receiving circuits 70a, 70b, ..., 70m have similar functions to the receiving circuit 70. Thus, the selecting circuit 80 also receives command packets from each of the receiving circuits 70, 70a, 70b, ..., 70m. Further, the merging circuit 90 receives storage data packets from the receiving circuit 70, 70a, 70b, ...70m.

The selecting circuit 80 selects only the first command packet with no error from command data input from the receiving circuits 70, 70a, 70b, ..., 70m. The selecting circuit 80 discards the second and subsequent input command packets. If any error is found in the first input command packet, the command packet is discarded, and the next command packet with no error is selected. The selecting circuit 80 extracts command data from the selected command packet to transfer the command data through the receiving side command bus 212b.

The merging circuit 90 merges unit data strings included in the storage data packets received from the receiving circuits 70, 70a, 70b, ..., 70m to generate storage data. Further, if an error occurs in any block, the merging circuit 90 restores a unit data string in the block involving the error using redundant data for use in restoration corresponding to the target one block. Then, the merging circuit 90 transfers the generated storage data through the receiving side storage data bus 212c.

If packets are input to the above input converter 212a through the receiving modules 241, 242, 243, ..., 24n, the decoder in each of the receiving circuits 70, 70a, 70b, ..., 70m sort the packets into command packets and storage data packets. Then, command data is extracted from the command packets. A unit data string or restoration use redundant data string of storage data is extracted from the storage data packets. The command data and the unit data string or restoration use redundant data string of storage data are stored in the command buffer or the data buffer in the receiving circuits 70, 70a, 70b, ..., 70m. The stored command data is subjected to error check. Likewise, the stored unit data string or restoration use redundant data string of storage data is subjected to error check on a block-by-block basis. Then, the selecting circuit 80 selects only one command data with no error and transfers the data to the receiving side command bus 212b. Further, the merging circuit 90 merges unit data strings received with the plural receiving modules 241, 242, 243, ..., 24n, and transfers the merged storage data to the receiving side storage data bus 212c. The receiver comprises a plurality of receiving units for receiving the write command and the data, each of the receiving units being coupled to each of the transmitting units via each of the paths, respectively, a merging unit for receiving and merging the segments of data back into the data, and a controller for receiving the duplicated writes commands from the transmitting units via the paths, and upon confirmation of successful receipt of at least one of the duplicated write commands, starting to store the merged data into the memory in accordance with the command.

Next, processing procedures of the receiving circuit 70, the selecting circuit 80, and the merging circuit are described.

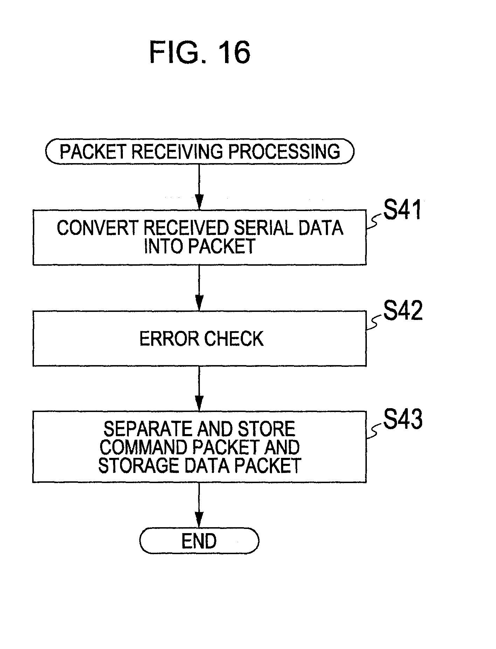

FIG. 16 is a flowchart illustrating a procedure of packet receiving processing. Hereinbelow, the processing illustrated in FIG. 16 will be described in sequential order of steps. Here, the following description about the processing is given on the assumption that serial data is received through the inter device interface cable 11.

[Step S41] The receiving module 241 converts serial data received through the inter device interface cable 11 into packets. The receiving module 241 transfers the packets to the receiving circuit 70.

[Step S42] The decoder 71 of the receiving circuit 70 performs error check on the received packets. If any error is found, the decoder 71 sets an error flag to corresponding data.

[Step S43] The decoder 71 sorts the packets subjected to error check into command packets and storage data packets. If the input packets are command packets, the decoder 71 extracts command data from the command packets and stores the data in the command buffer 72. If the input packets are storage data packets, the decoder 71 extracts a unit data string in each block and stores the string in the data buffer 73.

Next, command data selecting processing is described.

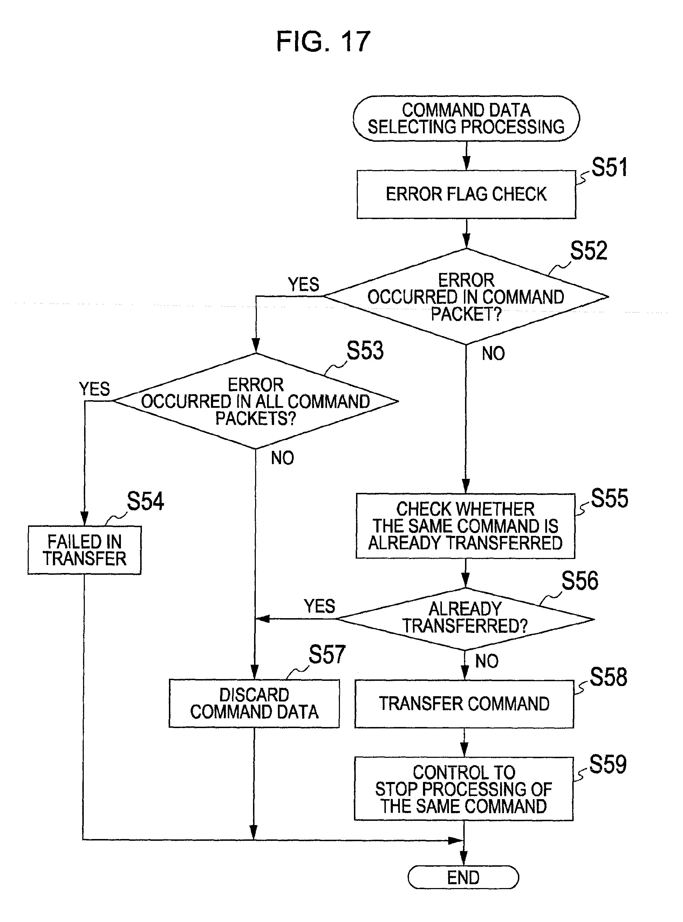

FIG. 17 is a flowchart illustrating a procedure for the command data selecting processing. Hereinbelow, the processing illustrated in FIG. 17 will be described in sequential order of steps.

[Step S51] When command data is stored in the command buffer in each of the receiving circuits 70, 70a, 70b, ..., 70m, the selecting circuit 80 acquires the command data and checks whether an error flag is set.

[Step S52] The selecting circuit 80 determines whether an error occurs in the acquired command packets. If an error is found, the processing advances to step S53. If no error is found, the processing advances to step S55.

[Step S53] The selecting circuit 80 determines whether all of the command packets received from the receiving circuits 70, 70a, 70b, ..., 70m involve an error. For example, the selecting circuit 80 memorizes the number of command packets involving an error in association with the packet identification number of the command packet. Then, if the number of command packets involving an error equals the number of receiving circuits, the selecting circuit 80 determines that all of the command packets involve an error. If all of the command packets involve an error, the processing advances to step S54. If any command packet has not been received, the processing advances to step S57.

[Step S54] If all of the command packets involve an error, the selecting circuit 80 executes error processing that is set for the case where transfer of any command packet ends in failure. The error processing is, for example, to request the transmitting device to resend the command packet. After this step, the command data selecting processing is terminated.

[Step S55] The selecting circuit 80 checks whether the same command data has been transferred. For example, the selecting circuit 80 memorizes the packet identification number of the last transferred command data. Then, if the packet identification number of a received command packet matches the packet identification number of the transferred command data, the selecting circuit 80 determines that command data included in the received command packet has been already transferred.

[Step S56] If the same command data has been transferred, the selecting circuit 80 advances the processing to step S57. Further, if the same command data has not been transferred, the selecting circuit 80 advances the processing to step S58.

[Step S57] If an error is found in a command packet or the same command data has been already transferred, the selecting circuit 80 discards received command data. After this step, the command data selecting processing is terminated.

[Step S58] The selecting circuit 80 transfers a command extracted from the command packet through the receiving side command bus 212b.

[Step S59] The selecting circuit 80 controls the transfer of the same command data from that time onward. For example, the selecting circuit 80 memorizes the packet identification number of transferred command data. From then on, the selecting circuit 80 controls the transfer of command data in a command packet having the same packet identification number as the memorized packet identification number. After this step, the command selecting processing is terminated.

Next, storage data merging processing is described.

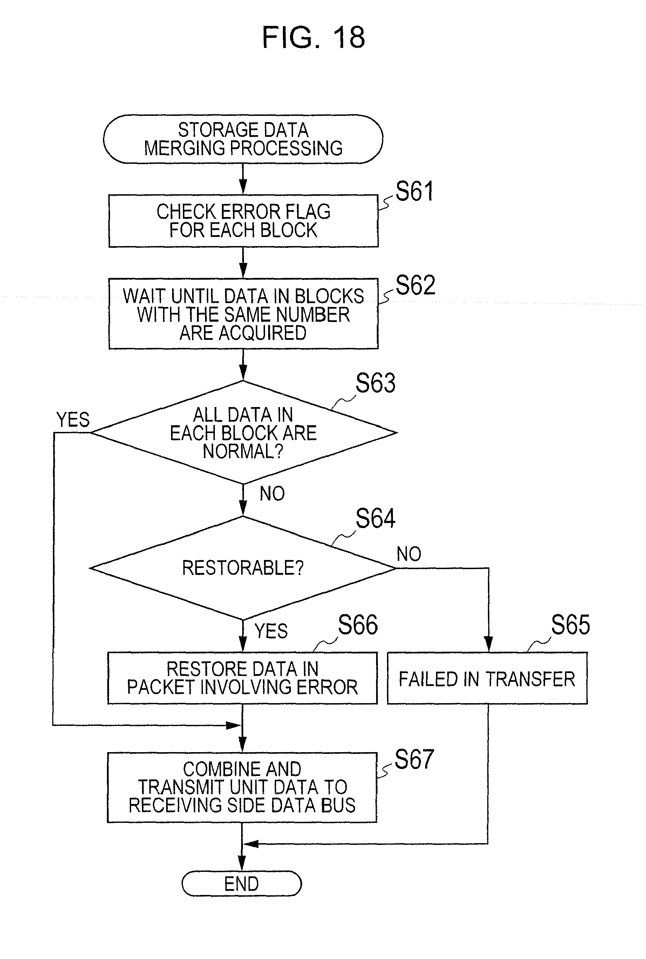

FIG. 18 is a flowchart illustrating a procedure for the storage data merging processing. Hereinbelow, the processing illustrated in FIG. 18 will be described in sequential order of steps.

[Step S61] When the unit data string or restoration use redundant data string of storage data is stored in the data buffer of the receiving circuits 70, 70a, 70b, ..., 70m, the merging circuit 90 acquires data of each string and checks an error flag on a block-by-block basis.

[Step S62] The merging circuit 90 waits until data of blocks stored in the same ordinal position in storage data packets received with the receiving modules 241, 242, 243, ..., 24n are acquired.

[Step S63] The merging circuit 90 determines whether data in blocks (blocks including unit data strings) stored in the same ordinal position in storage data packets received with the receiving modules 241, 242, 243, ..., 24n are all normal. If an error is found in at least one block, it is determined abnormal. If all blocks could be normally received, the processing advances to step S67. If an error is found in at least one block, the processing advances to step S64.

[Step S64] The merging circuit 90 determines whether the block involving an error can be restored. More specifically, the merging circuit 90 confirms that an error is found in one block including a unit data string among blocks in storage data packets received with the receiving modules 241, 242, 243, ..., 24n and an error is not found in a block including a restoration use redundant data string. If the above conditions are satisfied, the block involving an error can be restored. If the block can be restored, the processing advances to step S66. If the block may not be restored, the processing advances to step S65.

[Step S65] The merging circuit 90 performs error processing that is set for the case where transfer of any storage data packet ends in failure. The error processing is, for example, to request the transmitting device to resend the storage data packet. After this step, the merging processing is terminated.

[Step S66] The merging circuit 90 restores data in the packet involving an error. More specifically, the merging circuit 90 performs exclusive OR of data (unit data string and restoration use redundant data string) of other blocks transmitted in the same order as the block involving an error on a bit basis. The calculation result is a unit data string included in the block involving an error.

[Step S67] The merging circuit 90 combines unit data and transmits the combined one to the receiving side storage data bus 212c. After this step, the merging processing is terminated.

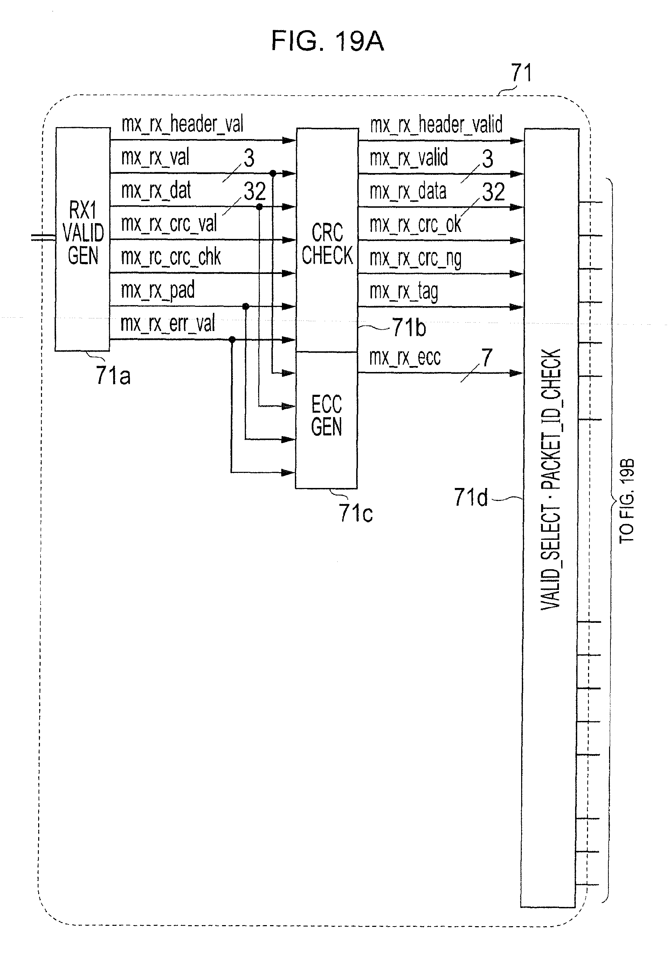

Next, the internal circuit of the input converter 212a is described with reference to FIGs. 19A to 22.

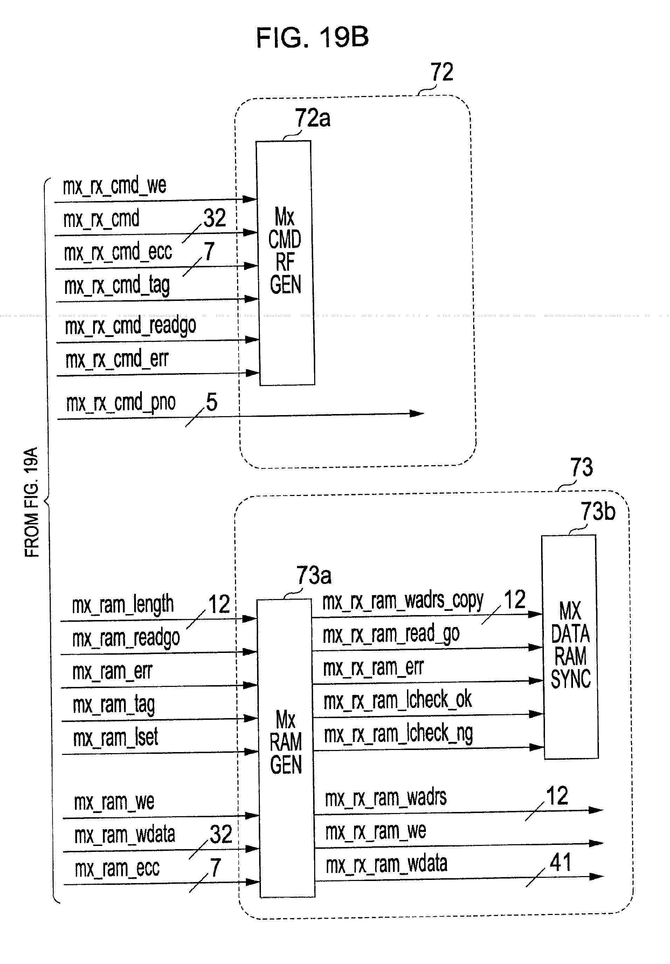

FIGs. 19A and 19B are first diagrams illustrating the internal circuit of the input converter. Input data from the receiving module 241 is input to a received packet decoding circuit (RX1_VALID_GEN) 71a of decoder 71. The received packet decoding circuit 71a analyzes the received packet to output an analysis result. The output analysis result includes a signal (mx_rx_header_val) representing header information of the received packet, a signal (mx_rx_val) representing payload of the received packet, data (mx_rx_dat) of the received packet, a value of CRC (mx_rx_crc_val) of the received packet, a timing signal (mx_rx_crc_chk) as a target for CRC in the received packet, added data (mx_rx_pad) of the received packet, and an error detection signal (mx_rx_err_val).

A CRC check circuit (CRC_CHECK) 71b receives all output data from the received packet decoding circuit 71a. The CRC check circuit 71b performs CRC check based on the input data. Then, the CRC check circuit 71b outputs a check result. The output check result includes a signal (mx_rx_header_valid) representing header information after CRC check, a signal (mx_rx_valid) representing payload data after CRC check, data (mx_rx_data) of the received packet after CRC check, data (mx_rx_data) of the received packet after CRC check, a normal detection signal (mx_rx_crc_ok) representing a positive result of the CRC check, an error detection signal (mx_rx_crc_ng) representing that an error is detected upon CRC check, and added data (mx_rx_tag) after CRC check.

An ECC generating circuit (ECC_GEN) 71c receives the signal (mx_rx_val) representing payload of the received packet, the data (mx_rx_dat) of the received packet, the added data (mx_rx_pad) of the received packet, and the error detection signal (mx_rx_err_val) out of the output data from the received packet decoding circuit 71a. The ECC generating circuit 71c generates an ECC based on the received data. Then, the ECC generating circuit 71c outputs the generated ECC (mx_rx_ecc).

A received packet analyzing circuit (VALID_SELECT-PACKET__ID_CHECK) 71d receives output data from the CRC check circuit 71b and the ECC generating circuit 71c. The received packet analyzing circuit 71d analyzes and sorts received packets based on the input data. Sorting is performed in accordance with the packet type identifier included in header information. In other words, if the packet type identifier is "CMD", a target command is determined as a command packet while the identifier is "STD", a target command is determined as a storage data packet.

If the received packet is a command packet, the received packet analyzing circuit 71d outputs an instruction to write an analysis result toward the command buffer 72. The write instruction output to the command buffer 72 includes a write enable signal (mx_rx_cmd_we) that allows write to the command buffer 72, received command data (mx_rx_cmd), an ECC (mx_rx_cmd_ecc) of the received command data, added data (mx_rx_cmd_tag) to the received command data, a final data pointer (mx_rx_cmd_readgo) of the received command data, an error signal (mx_rx_cmd_err) of the received command data, and a packet identification number (mx_rx_cmd_pno) of the received command data. All of the above but the packet identification number (mx_rx_cmd_pno) are input to a buffer write control circuit (Mx_CMD_RF_GEN) 72a in the command buffer 72.

If the received packet is a storage data packet, the received packet analyzing circuit 71d outputs an instruction to write an analysis result toward the data buffer 73. The write instruction output to the data buffer 73 includes a length of received storage data (mx_ram_length), a final data pointer (mx_ram_readgo) of the received storage data, an error signal (mx_ram_err) of the received storage data, added data (mx_ram_tag) to the received storage data, a data length set signal (mx_ram_Iset) of the received storage data, a write enable signal (mx_ram_we) that allows write to the data buffer 73, storage data to be written (mx_ram_wdata), and an ECC (mx_ram_ecc) of the storage data.

All of the data output from the received packet analyzing circuit 71d to the data buffer 73 are input to a data buffer write control circuit (Mx_RAM_GEN) 73a in the data buffer 73. The data buffer write control circuit 73a controls write of storage data packets. The data buffer write control circuit 73a outputs a write address (mx_rx_ram_wadrs_copy) of the data buffer, a final data pointer (mx_rx_ram_read_go) of the received storage data, an error signal (mx_rx_ram_err) of the received storage data, a normal detection signal (mx_rx_ram_lcheck_ok) indicating a positive result of data length check on the received storage data, and an error signal (mx_rx_ram_lcheck_ng) indicating that an error occurs upon data length check on the received storage data to a data buffer clock synchronizing circuit (MX_DATA_RAM_SYNC) 73b. In addition, the circuit outputs to a data buffer memory, a write address (mx_rx_ram_wadrs) of the data buffer, a write enable signal (mx_rx_ram_we) that allows write to the data buffer, and write data (mx_rx_ram_wdata) to the data buffer.

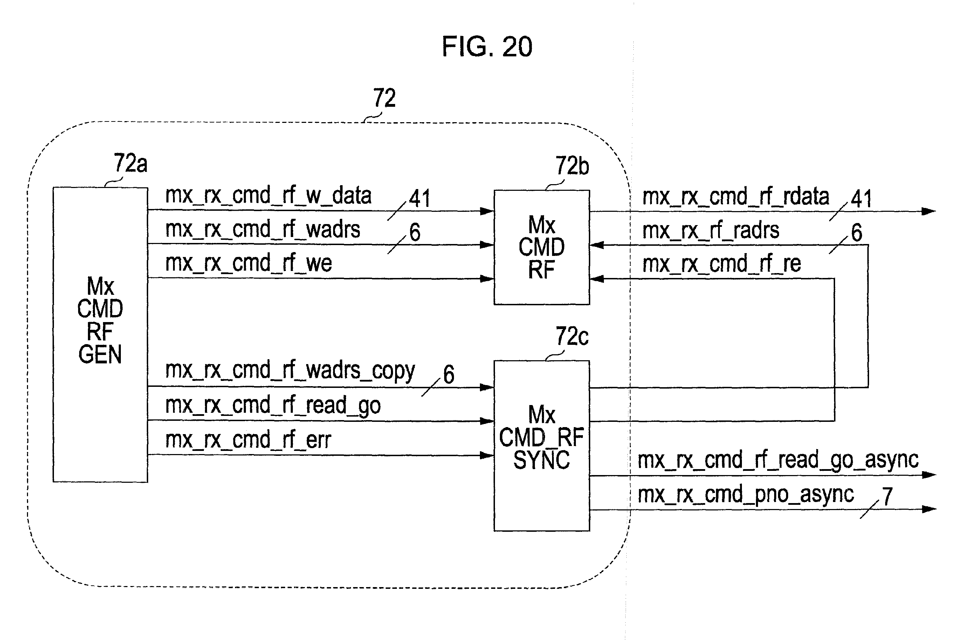

FIG. 20 is a second diagram illustrating the internal circuit of the input converter. FIG. 20 illustrates the internal configuration of the command buffer 72. A command buffer write control circuit (Mx_CMD_RF_GEN) 72a of the command buffer 72 controls write of command packets in accordance with data input from the received packet analyzing circuit 71d. The command buffer write control circuit 72a outputs to a command buffer memory (Mx_CMD_RF) 72b, command buffer write data (mx_rx_cmd_rf_w_data), a write address of a command buffer (mx_rx_cmd_rf_wadrs), and a command buffer write enable signal (mx_rx_cmd_rf_we). In addition, the command buffer write control circuit 72a outputs to a command buffer clock synchronizing circuit (Mx_CMD_RF_SYNC) 72c, a write address of a command buffer (mx_rx_cmd_rf_wadrs_copy), a final data pointer of received command data (mx_rx_cmd_rf_read_go), and an error signal (mx_rx_cmd_rf_err) of received command data.

A command buffer clock synchronizing circuit 72c performs sync control on read from the command buffer memory 72b based on data received from the received packet analyzing circuit 71d. The command buffer clock synchronizing circuit 72c outputs to the command buffer memory 72b, a read address (mx_rx_rf_radrs) of a command buffer and a command buffer read enable signal (mx_rx_cmd_rf_re). Further, the command buffer clock synchronizing circuit 72c outputs a sync final data pointer (mx_rx_cmd_rf_read_go_async) of received command data, and a packet identification number (mx_rx_cmd_pno_async) of received command data to the selecting circuit 80.

When receiving the command buffer write enable signal (mx_rx_cmd_rf_we), the command buffer memory 72b stores the command buffer write data (mx__rx_cmd_rf_w_data) in a storage area specified by the write address (mx_rx_cmd_rf_wadrs). Further, when receiving the command buffer read enable signal (mx_rx_cmd_rf_re), the command buffer memory 72b outputs data stored in a storage area specified by a read address (mx_rx_rf_radrs) as command buffer read data (mx_rx_cmd_rCrdata).

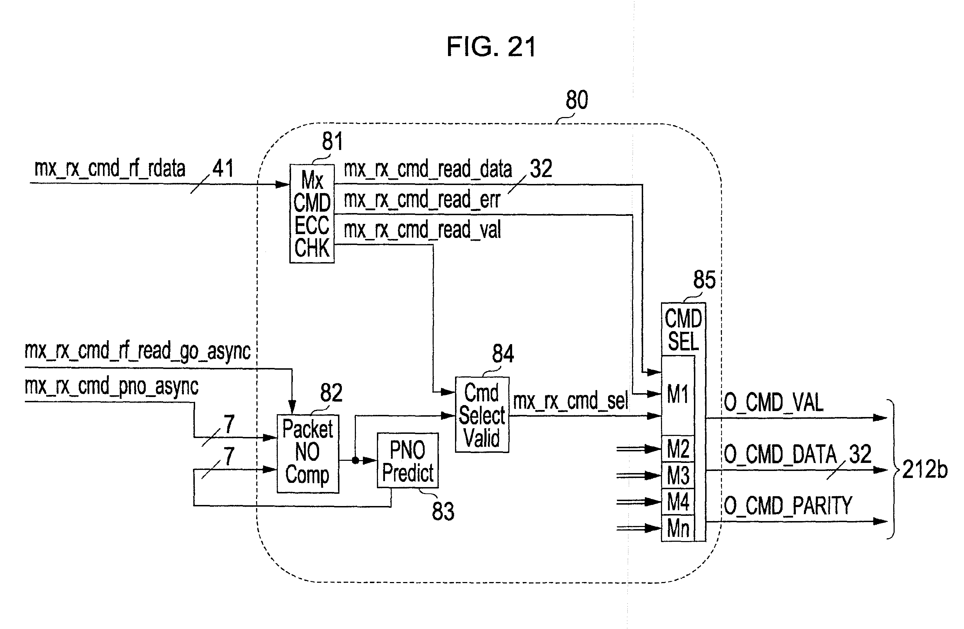

FIG. 21 is a third diagram illustrating the internal circuit of the input converter. FIG. 21 illustrates the internal configuration of the selecting circuit 80. An ECC check circuit (Mx_CMD_ECC_CHK) 81 of the selecting circuit 80 receives the command buffer read data (mx_rx_cmd_rf_rdata) output from the command buffer memory 72b. The ECC check circuit 81 performs ECC check on the data after the command buffer read operation. The ECC check circuit 81 outputs a result of ECC check. The output check result includes ECC checked command buffer read data (mx_rx_cmd_read_data), an error detection signal (mx_rx_cmd_read_err) indicating that an error is detected upon the ECC check, and a valid signal (mx_rx_cmd_read_val) for ECC checked command buffer read data.

A comparison circuit (Packet_NO_Comp) 82 receives the sync final data pointer (mx_rx_cmd_rf_read_go_async) output from the command buffer clock synchronizing circuit 72c, and the packet identification number (mx_rx__cmd_pno_async). Further, the comparison circuit 82 receives the output of a packet identification number expected value setting circuit (PNO_Predict) 83 (expected value of a packet identification number). Receiving the sync final data pointer (mx_rx_cmd_rf_read_go_async), the comparison circuit 82 compares the packet identification number (mx_rx_cmd_pno_async) with the expected value of the packet identification number. Then, if the numbers are matched as a result of comparison, the comparison circuit 82 outputs a match signal to the packet identification number expected value setting circuit 83 and a command validity determination circuit (Cmd_Select_Valid) 84.

The packet identification number expected value setting circuit 83 sets an expected value of a packet identification number of the next command packet. In other words, the identification number expected value setting circuit 83 counts up a current expected value and sets the value as an expected value of the next packet identification number if receiving the match signal from the comparison circuit 82. Then, the identification number expected value setting circuit 83 outputs the new expected value of the packet identification number to the comparison circuit 82.

The command validity determination circuit 84 receives the match signal from the comparison circuit 82 and a valid signal (mx_rx_cmd_read_val) for command buffer read data from the ECC check circuit 81. When receiving the match signal, the command validity determination circuit 84 determines whether command data is valid based on the valid signal (mx_rx__cmd_read_vat). Then, if the command data is valid, the command validity determination circuit 84 outputs a command valid signal (mx_rx_cmd_sel).

A command selecting circuit (CMD_SEL) 85 receives the command buffer read data (mx_rx_cmd_read_data) and error detection signal (mx_rx_cmd read_err) output from the ECC check circuit 81 and the command valid signal (mx_rx_cmd_sel) output from the command validity determination circuit 84. Although only data input regarding a command packet input to the receiving module 241 is illustrated as data input to the command selecting circuit 85 in FIG. 21, data regarding command packets input to the other receiving modules are similarly input. The command selecting circuit 85 selects the oldest one of input data with no error. Then, the command selecting circuit 85 outputs a valid signal (O_CMD_VAL) of a received command, received command data (O_CMD_DATA), and a parity value of a received command (O_CMD_PARITY) to the receiving side command bus 212b based on the selected data.

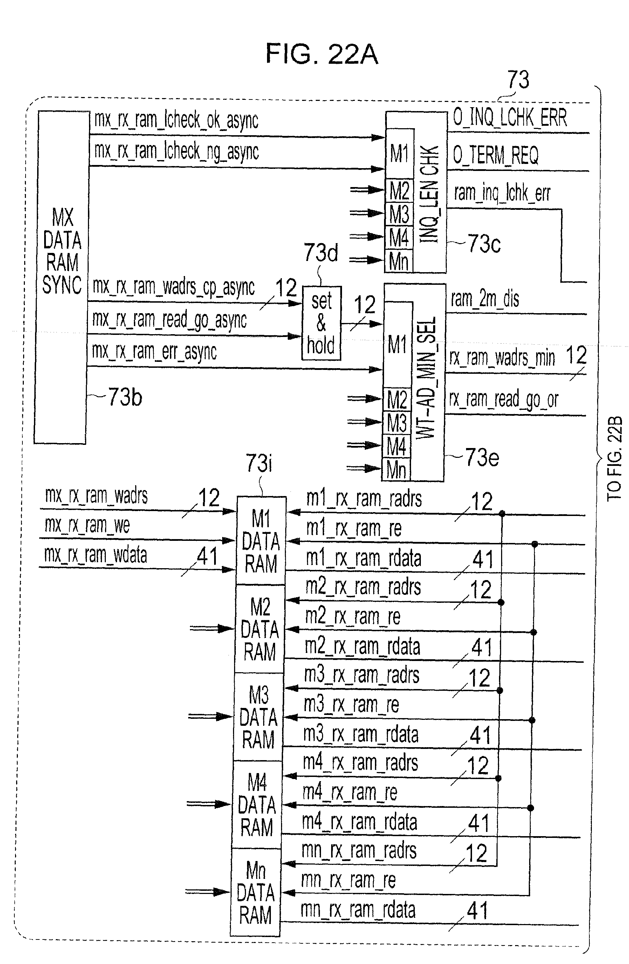

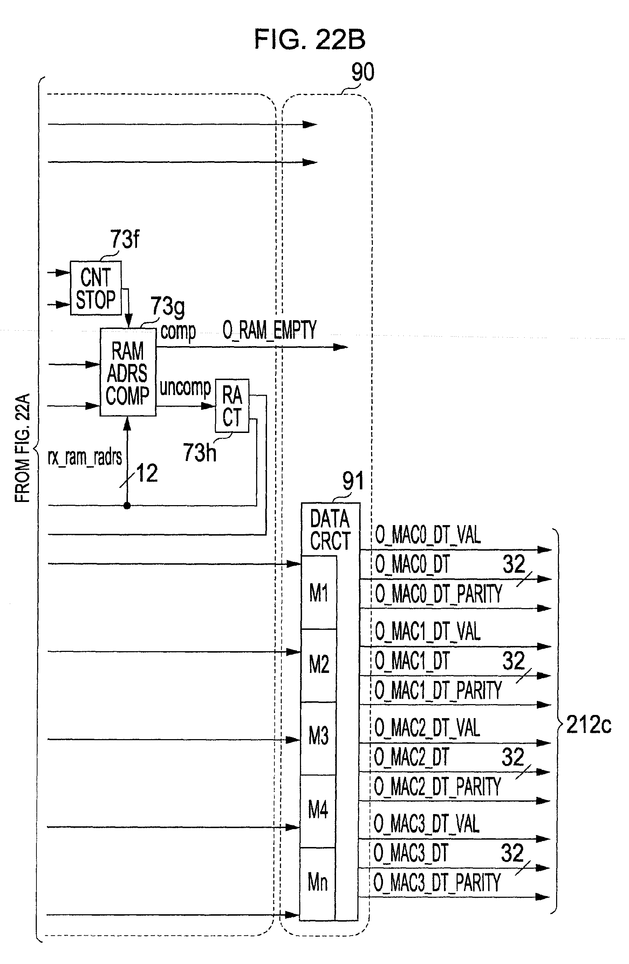

FIGs. 22A and 22B are fourth diagrams of the internal circuit of the input converter. FIGs. 22A and 22B illustrate a main part of the data buffer 73 and the internal configuration of the merging circuit 90.

The data buffer clock synchronizing circuit 73b of the data buffer 73 performs clock sync control for reading data in the storage data buffer based on the input data illustrated in FIGs. 19A and 19B. For the sync control, the data buffer clock synchronizing circuit 73b outputs a normal value detection sync signal (mx_rx_ram_lcheck_ok_async) indicating a positive result of data length check for received storage data, an error detection sync signal (mx_rx_ram_icheck_ng_async) indicating that an error is detected upon data length check for received storage data, a data write sync address (mx_rx_ram_wadrs_cp_async), a data buffer write enable sync signal (mx_rx_ram_read_go_async), and a data buffer write error sync signal (mx_rx_ram_err_async).

A data buffer write length check circuit (INQ_LEN_CHK) 73c receives the normal value detection sync signal (mx_rx_ram_lcheck_ok_async) and error detection sync signal (mx_rx_ram_Icheck_ng_async) output from the data buffer clock synchronizing circuit 73b. Although only data input regarding a command packet input to the receiving module 241 is illustrated as data input to the data buffer write length check circuit 73c in FIGs. 22A and 22B, data regarding command packets input to the other receiving modules are similarly input. The data buffer write length check circuit 73c determines whether a positive result of data length check for written storage data is obtained. Then, the data buffer write length check circuit 73c outputs a determination result. The output determination result includes a data length error detection signal (0_INQ_LCHK_ERR) for use in notification for the merging circuit 90, a termination sequence request signal (O_TERM_REQ), and a data length error detection signal (ram_inq_lchk_err) for use in internal processing.

A data buffer write address storage circuit (Set&hold) 73d receives the data write sync address (mx_rx_ram_wadrs_cp_async) and data buffer write enable sync signal (mx_rx_ram_read_go_async) output from the data buffer clock sync circuit 73b. The data buffer write address storage circuit 73d temporarily stores the input data write sync address (mx_rx_ram_wadrs_cp_async). Then, if receiving the data buffer write enable sync signal (mx_rx_ram_read_go_async), the data buffer write address storage circuit 73d outputs the stored address to a write address minimum value determination circuit (WT-AD_MIN_SEL) 73e. Here, the write address minimum value determination circuit 73e also receives write addresses for storage data input to receiving modules other than the receiving module 241.

The write address minimum value determination circuit 73e detects the minimum value of input addresses. Then, the write address minimum value determination circuit 73e outputs a result of detection processing. The output detection result includes an error detection signal (ram_2m_dis) indicating that an error corresponding to 2 passes or more (2 or more storage data received with different receiving modules) is detected, a data buffer write length minimum address (rx_ram_wadrs_min), and the data buffer write length minimum address validity signal (rx_ram_read_go_or).

A data buffer read processing stop circuit (CNT_STOP) 73f receives the data length error detection signal (ram_inq_lchk_err) output from the data buffer write length check circuit 73c and the error detection signal (ram_2m_dis) output from the write address minimum value determination circuit 73e. When an error is detected, the data buffer read processing stop circuit 73f outputs a read processing stop signal to a data buffer read address comparison circuit (RAM_ADRS_COMP) 73g.

The data buffer read address comparison circuit 73g receives the data buffer write length minimum address (rx_ram_wadrs_min) and data buffer write length minimum address validity signal (rx_ram_read_go_or) output from the write address minimum value determination circuit 73e. In addition, the data buffer read address comparison circuit 73g receives a data buffer read address (rx_ram_radrs) output from a read address generating circuit (RA_CT) 73h. The data buffer read address comparison circuit 73g determines whether valid storage data is found based on the valid data buffer write length minimum address (rx_ram_wadrs_min). If the data buffer write length minimum address matches the data buffer read address, i.e., no valid storage data is found (buffer is empty), the data buffer read address comparison circuit 73g outputs a data buffer address match signal (comp). The data buffer address match signal (comp) is used as an empty signal (O_RAM_EMPTY) for notifying the merging circuit 90 that the memory buffer is empty. In addition, if valid storage data remains to be processed, the data buffer read address comparison circuit 73g outputs a data buffer address mismatch signal (uncomp).

The read address generating circuit 73h receives the data buffer address mismatch signal (uncomp) output from the data buffer read address comparison circuit 73g. The read address generating circuit 73h sequentially generates data buffer read addresses while the data buffer address mismatch signal (uncomp) is input. Then, the read address generating circuit 73h outputs the generated data buffer read address (m1_rx_ram_radrs, m2_rx_ram_radrs, ..., mn_rx_ram_radrs) and data buffer read enable signals (m1_rx_ram_re, m2_rx_ram_re, ..., mn_rx_ram_re) to a data buffer memory (DATA_RAM) 73i.

The data buffer memory 73i includes memories for each receiving module. When receiving the data buffer read enable signal, each memory outputs data in a storage area specified by an input data buffer read address. The output data buffer read data (m1_rx_ram_rdata, m2_rx_ram_rdata, ..., mn_rx_ram_rdata) is sent to the merging circuit 90.

The merging circuit 90 includes a data correction circuit 91. The data correction circuit 91 analyzes data output from the data buffer memory 73i, and if an error is detected, restores the data involving the error using redundant data for use in restoration. Then, the data correction circuit 91 merges the data subjected to needed correction and outputs the data to the receiving side storage data bus 212c as storage data. The output data includes a valid signal (O_MACO_DT_VAL, O_MAC1_DT_VAL, O_MAC3_DT_VAL) for receiving side storage data, receiving side storage data (O_MAC0_DT, O_MAC1_DT O_MAC3_DT), and parity values (O_MACO_DT_PARITY, O_MAC1_DT_PARITY, O_MAC3_DT PARITY) of receiving side storage data.

The input converter 212a can be achieved by the aforementioned circuit configuration.

Next, an example of how to select command data is described.

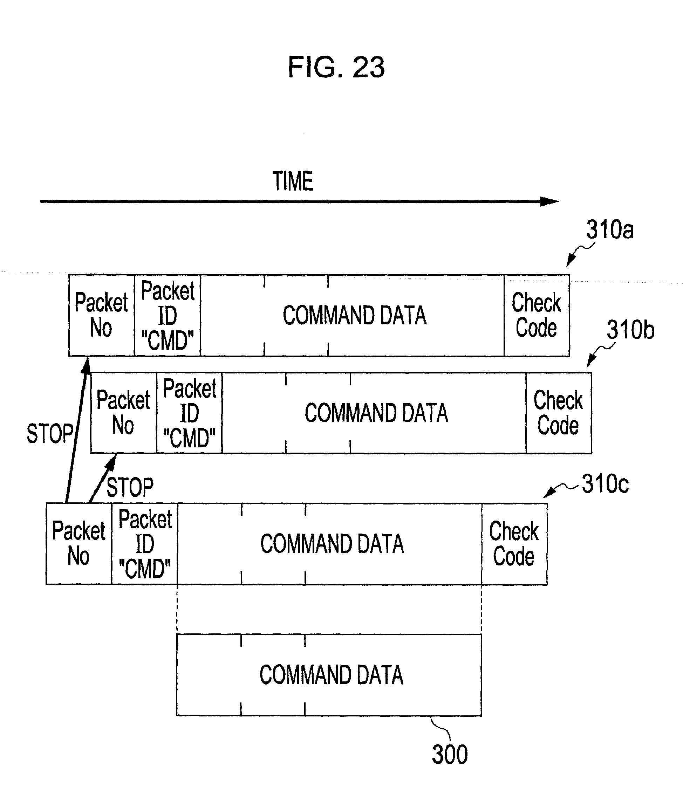

FIG. 23 illustrates an example of how to select command data. In the illustrated example of FIG. 23, command packets 310c, 310a, and 310b are received in the stated order.

If the first command packet 310c is input to the selecting circuit 80, command data 300 is extracted from the command packet 310c. Then, the selecting circuit 80 transfers the command data 300 to the receiving side command bus 212b. At that time, the selecting circuit 80 memorizes a packet identification number (Packet No.) of the command packet 310c.

After that, if the subsequent command packets 310a and 310b are received, the selecting circuit 80 checks packet identification numbers of the command packets 310a and 310b against the memorized packet identification number. In this example, the packet identification numbers match each other. Then, the selecting circuit 80 determines the command packets 310a and 310b as target packets for control, and discards the command packets 310a and 310b.

In this way, the command data 300 included in the first command packet 310c out of the plural command packets 310a, 310b, and 310c having the same packet identification number is transferred to the receiving side command bus 212b. Then, the transfer of command data included in the command packets 310a and 310b received through other receiving modules is suppressed. Therefore, it is possible to prevent overlaps upon receiving commands.

Next, how to merge storage data packets is described.

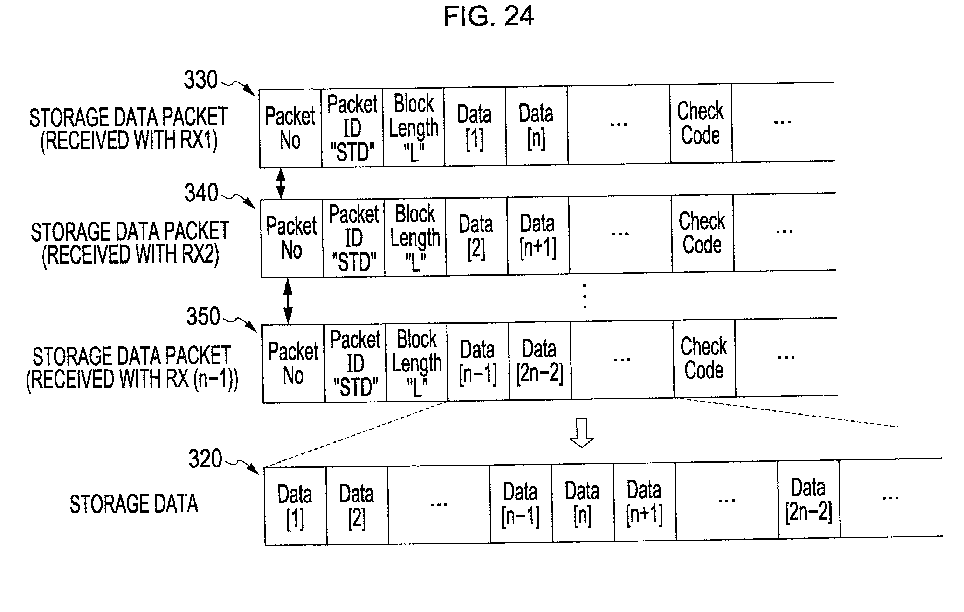

FIG. 24 illustrates an example of how to merge storage data packets. Storage data packets 330, 340, ..., 350 are sequentially stored in data buffers in the receiving circuits 70, 70a, 70b, ..., 70m. In the receiving circuits 70, 70a, 70b, ..., 70m, a position of a check code (Check Code) is detected based on a value of the block length (Block Length). Each time the receiving circuits 70, 70a, 70b, ..., 70m receive the check code, data of a corresponding block is checked. The merging circuit 90 waits until all of "block data stored at the same timing in storage data packets having the same packet identification number (Packet No)" are checked in the receiving circuits 70, 70a, 70b, ..., 70m. If the data in the same blocks in the packets having the same packet identification numbers (Packet No) are acquired in all of the receiving circuits 70, 70a, 70b, ..., 70m, the merging circuit 90 transfers the data to the receiving side storage data bus 212c in the order of Data[1], Data[2], ....

According to this method, block data is checked or subjected to merging processing on the basis of block received. In other words, packet data can be processed before the storage data packet has been received. Therefore, a retention amount of data is reduced compared with the case where data is not divided into blocks and accordingly, data delay time can be reduced. Further, only a check code is added to each block. Thus, overhead accompanying the addition of control information can be reduced, compared with the case where data is divided into packets added with packet information such as a packet identification number.

Further, in this embodiment, one storage data packet includes redundant data for use in restoration. Therefore, block data involving an error can be restored using the redundant data for use in restoration.

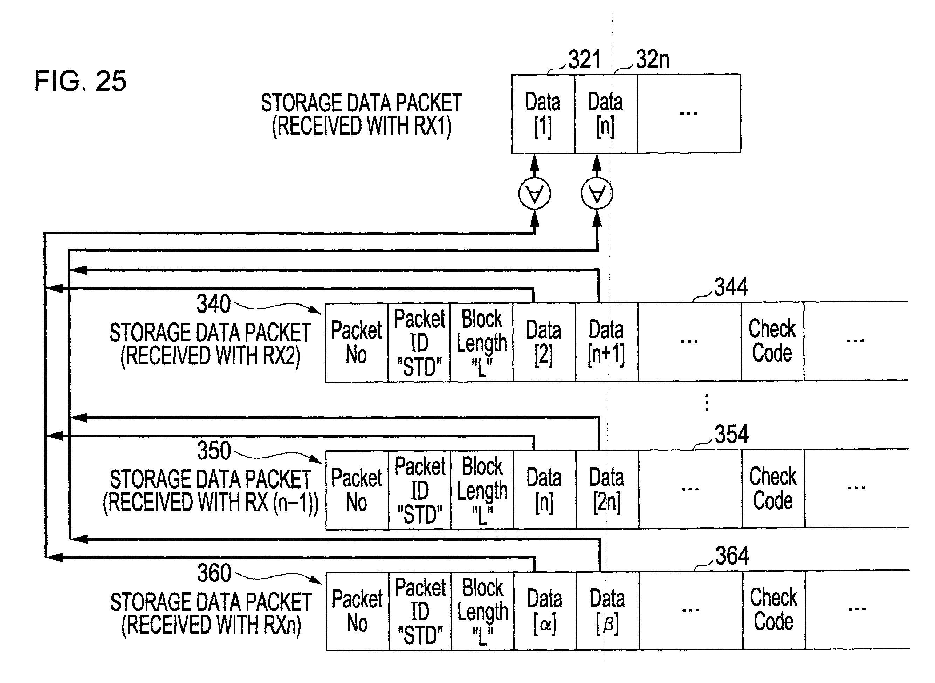

FIG. 25 illustrates how block data is restored. In the illustrated example of FIG. 25, an error is detected in the first block in a storage data packet received with the receiving module 241 assigned with identification information "RX1".

In this case, the merging circuit 90 restores error data using redundant data for use in restoration. In other words, the merging circuit 90 performs exclusive OR on block data stored in the same ordinal position in storage data packets 340, ..., 350, 360 received with the receiving modules 242, 243, ..., 24n having identification information other than "RX1" (identification information "RX2" to "RXn") on a bit-by-bit basis. Thus, the unit data 321, 32n, ... included in the first block of the storage data packet 330 are restored.

Here, each check code for storage data packets is secured only for data of the previous block. Therefore, in the case where an error is found in the second and subsequent blocks, even if plural blocks cause an error, data can be restored unless an error concurrently occurs in blocks of the same ordinal position in different storage data packets.

Note that packet information such as a packet identification number may not be received if an error is detected in the first block. Thus, a storage data packet involving the error is discarded.

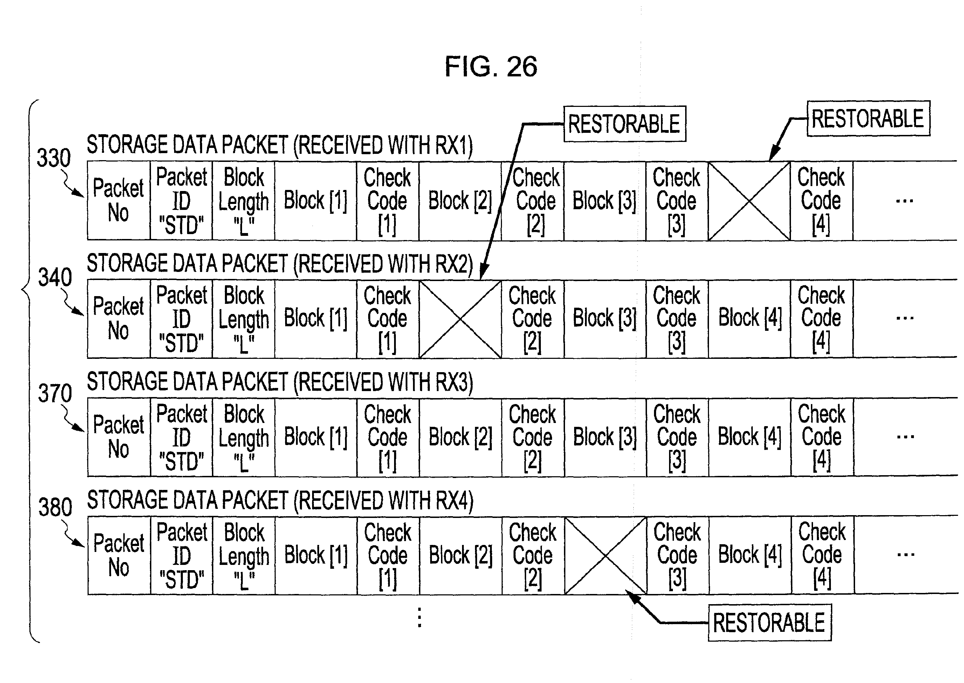

FIG. 26 illustrates how an error occurs in plural blocks. In FIG. 26, parenthesized numbers representing the sequence are given to each block.

No error occurs in a first block (Block[1]) of each of the storage data packets 330, 340, 370, and 380. In a second block (Block[2]), an error is detected only in a block included in the storage data packet 340. In a third block (Block[3]), an error is detected only in a block included in the storage data packet 380. In a fourth block (Block[4]), an error is detected only in a block included in the storage data packet 330.

In the illustrated example of FIG. 26, an error occurs only in one block among blocks transmitted in the same order in the storage data packets 330, 340, 370, and 380. Accordingly, although an error is detected in plural blocks as a whole, every block involving the error can be restored using the block in another storage data packet, which is stored in the same ordinal position as the target block.

Here, command data and storage data are independently processed. Then, the command data and storage data are mixed in the selectors 61, 62, 63, ..., 6n in the transmitting device 111. The mixed command packets and storage data packets are separated by the decoder 71 in the receiving device 212. Accordingly, the inter device interface can transfer command packets and storage data packets in a mixed form.

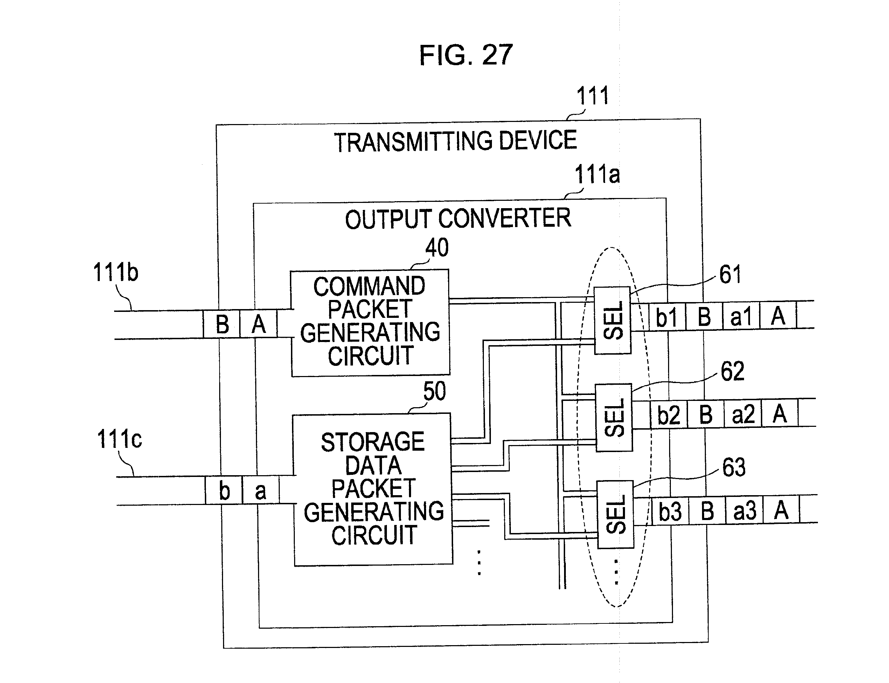

FIG. 27 illustrates how data including command packets and storage data packets in mixture is transmitted. In the illustrated example of FIG. 27, command data "A" and command data "B" are input from the transmitting side command bus 111b to the transmitting device 111. At the same time, storage data "a" and command data "b" are input from the transmitting side storage data bus 111c to the transmitting device 111. In the case of transferring packets input at the same timing as above, command data and storage data are packetized and selected by the selectors 61, 62, 63, .... At this time, the selectors 61, 62, 63, ... select the oldest packet first. Accordingly, the inter device interface transfers the packets of the command data "A", the packets of the storage data "a", the packets of the command data "B", and the packets of the storage data "b" in a mixed form.

Here, the storage data "a" is divided into unit data and data "a1", "a2", "a3", ... assigned to each transmitting modules are packetized. Likewise, the storage data "b" is divided into unit data and data "b1", "b2", "b3", ... assigned to each transmitting modules are packetized.

As described above, according to the embodiment of the present invention described above, in the inter device interface using plural general-purpose transfer modules, high speed transfer and high reliability transfer can be switched in accordance with what is requested of target data for transfer. As a result, data can be transferred with both of high reliability and high transfer efficiency.

Moreover, with regard to the high speed transfer, since packet data is divided into blocks and an error in each block can be recovered, high reliability can be secured upon high speed transfer as well.

In this embodiment, command data is described as a target for redundant transfer, and high reliability data transfer is realized by transferring the command data with overlaps. However, any other data may be used as a target for redundant transfer. In other words, by inputting the other data to the transmitting side command bus 111b, the input data can be transferred through plural communication paths with overlaps. For example, storage data can be transferred with overlaps.

Likewise, in this embodiment, storage data is described as a target for parallel transfer, and high speed data transfer is realized by transferring divided ones of the storage data in parallel through plural communication paths. However, any other data may be used as a target for parallel transfer. In other words, by inputting the other data to the transmitting side storage data bus 111c, the input data can be transferred in parallel. For example, command data can be transferred in parallel.

According to the above transmitting device and receiving device, data transfer can be performed with both of high reliability and high speed operation.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it could, for example, be in the form of a signal such as a downloadable data signal provided from an Internet website, or it could be in any other form.

As mentioned above, the present invention has been specifically described for better understanding of the embodiments thereof and the above description does not limit other aspects of the invention. Therefore, the present invention can be altered and modified in a variety of ways without departing from the gist and scope thereof.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A system comprising a transmitter, a receiver and a plurality of paths connecting the transmitter and the receiver, the transmitter being configured to transmit a command and data to the receiver, the receiver being configured to process the data upon successful receipt of the command,
the transmitter comprising:
a plurality of transmitting units that transmit the command and the data, each of the transmitting units being connected to one of the paths;
a dividing unit that divides data into a plurality of segments, and that enables each of the transmitting units to transmit each of the segments of the data via each of the corresponding paths, respectively; and
a duplicating unit that duplicates the command, and that enables each of the transmitting units to transmit each of the duplicated commands via each of the paths;
the receiver comprising:
a plurality of receiving units that receive the command and the data, each of the receiving units being connected to each of the transmitting units via each of the paths, respectively;
a merging unit that merges the segments of data back into a data; and
a controller that receives the duplicated commands from the transmitting units via the paths, and upon confirmation of successful receipt of at least one of the duplicated commands, that starts to process the merged data in accordance with the command.

2. The system of claim 1, wherein the command is a write command, the receiver is connected to a memory, and the controller stores the merged data into the memory in accordance with the write command.

3. The system of claim 1 or 2, wherein the dividing unit generates redundant data for use in restoration on the basis of the segment of the data and enables each of the transmitting units to transmit the redundant data and the segment of the data.

4. The system of claim 3, wherein the dividing unit divides the segment of the data into blocks of a predetermined length adding a check code to each of the blocks, and generates the redundant data on the basis of each of the blocks.

5. The system of claim 4, wherein the dividing unit generates the redundant data on the basis the plurality of the blocks, each of the blocks being transmitted in the same order as each of the segments of the data.

6. The system of claim 1, wherein the dividing unit divides the segments of the data into a plurality of blocks and adds a check code to each of the blocks.

7. The system of any preceding claim, wherein each of the transmitting units transmits the segments of the data and the duplicated data in the order received from the dividing unit and the duplicating unit.

8. The system of any preceding claim, wherein the receiving unit selects one of the commands with no error.

9. The system of claim 3, wherein the merging unit restores the segments of data back into the data by using the redundant data when an error is found in at least one segments of data.

10. The system of claim 9, wherein the receiving unit receives the command and data on a block by block basis and the merging unit merges the segments of data including an error on a block by block basis.

11. A transmitter connectable to a receiver via a plurality of paths connecting the transmitter and the receiver, the transmitter being configured to transmit a command and data to the receiver, the transmitter comprising:
a plurality of transmitting units that transmit the command and the data, each of the transmitting units being connected to one of the paths;
a dividing unit that divides data into a plurality of segments, and that enables each of the transmitting units to transmit each of the segments of the data via each of the corresponding paths, respectively; and
a duplicating unit that duplicates the command, and that enables each of the transmitting units to transmit each of the duplicated commands via each of the corresponding paths.

12. The transmitter of claim 11, wherein the dividing unit generates redundant data for use in restoration on the basis of the segment of the data and enables each of the transmitting units to transmit the redundant data and the segment of the data.

13. The transmitter of claim 12, wherein the dividing unit further comprises dividing the segment of the data into blocks of a predetermined length and adding a check code to each of the blocks, and generates the redundant data on the basis of each of the blocks.

14. The transmitter of claim 13, wherein the dividing unit generates the redundant data on the basis the plurality of the blocks, each of the blocks being transmitted in the same order as each of the segments of the data.

15. A receiver connectable to a transmitter via a plurality of paths coupling the receiver and the transmitter, the receiver being configured to receive a command and data from the transmitter, the receiver comprising:
a plurality of receiving units that receive the command and the data, each of the receiving units being connected to each of the paths, respectively;
a merging unit that merge the segments of data back into a data; and
a controller that receives the duplicated commands from the transmitting units via the paths, and upon confirmation of successful receipt of at least one of the duplicated commands, that starts to process the merged data in accordance with the command.
